# EUROPEAN PATENT SPECIFICATION

(11) **EP 3 505 818 B1**
(45) Date of publication and mention of the grant of the patent: **04.01.2023**
(21) Application number: 18206688.6
(22) Date of filing: 16.11.2018
(51) Int. Cl.: F21S 41/663, F21S 41/143, F21S 43/14, B60Q 1/20, F21S 10/02, F21S 41/125, F21S 41/147, F21S 41/33

(54) **VEHICULAR LAMP AND LIGHTING CONTROL CIRCUIT OF VEHICULAR LAMP**
FAHRZEUGLAMPE UND BELEUCHTUNGSSTEUERSCHALTUNG EINER FAHRZEUGLAMPE
LAMPE DE VÉHICULE ET CIRCUIT DE COMMANDE D'ÉCLAIRAGE DE LAMPE DE VÉHICULE

(30) Priority: 16.11.2017 JP 2017220846; 20.11.2017 JP 2017222811
(43) Date of publication of application: 03.07.2019
(73) Proprietor: Stanley Electric Co., Ltd., Meguro-ku Tokyo 153-8636 (JP)
(72) Inventor: OKUMURA, Kanichi, Tokyo, 153-8636 (JP); KOMANO, Kenji, Tokyo, 153-8636 (JP)
(74) Representative: Schmidbauer, Andreas Konrad

(56) References cited:
- EP-A1- 2 161 494
- EP-B1- 2 161 494
- WO-A1-2015/081974
- DE-A1-102010 056 311
- DE-A1-102010 056 313
- DE-A1-102012 209 927
- DE-B4-102010 056 313
- JP-B1- 6 161 846
- US-A1- 2013 010 485
- US-A1- 2014 085 920
- US-A1- 2017 241 610

## Description

### Technical Field

The present invention relates to a vehicular lamp, and more particularly, to a vehicular lamp such as a fog lamp for an automobile capable of emitting light of different colors (white light and yellow light, for example) using an LED as a light source. Preferably, the vehicular lamp comprises a lighting control circuit configured to perform lighting control of a vehicular lamp such as a fog lamp for an automobile capable of emitting light of different colors (white light and yellow light, for example).

### Background Art

Conventionally, as a vehicular lamp which uses a plurality of LEDs as a light source and obtains desired light distribution characteristics by irradiating light emitted from each LED light source, a lamp having a configuration shown in FIG. 29 as a "light collecting unit" of a "vehicular lamp" has been disclosed in JP 2010-153269 A.

A light source unit 80 is constituted by three LED chips 81, 82, and 83, which are arranged along the width direction of the vehicle body. A reflector 86 is provided with a reflecting surface 85 along a virtual parabolic plane with the position of the LED chip 82 at the center of the light source 80 as a focal point and the virtual line as an axis 84.

The light emitted from each of the LED chips 81, 82, and 83 is reflected in a predetermined direction by the reflecting surface 85 of the reflector 86, and the reflected light is irradiated toward the front of the vehicle as irradiation light having a desired luminous intensity distribution.

Further, conventionally, in a vehicular lamp, as a lighting control circuit for individually lighting and controlling each of two sets of LED groups formed by series connection of a plurality of LEDs, for example, there is a circuit disclosed as a "lighting circuit" in JP 2016-199082 A.

In the disclosed lighting circuit, a turn-signal light source is constituted by a series connection of a plurality of LEDs, and a DRL light source is constituted by a series connection of a plurality of LEDs. In this circuit, a power supply voltage for driving turn-signal light emission supplied from a battery is ON/OFF controlled by a turn switch controlled by a control signal in accordance with the timing of turning on/off of the turn-signal light source, and is input to the lighting circuit. Similarly, the power supply voltage for driving DRL light emission supplied from the battery is ON/OFF-controlled by a DRL switch controlled by a control signal in accordance with the timing of turning on/off of the DRL light source, and is input to the lighting circuit.

Then, the power supply voltage for driving the turn-signal light emission and the power supply voltage for driving the DRL light emission input to the lighting circuit are voltage-converted into respective predetermined voltages by a conversion unit composed of a DC/DC converter. The output is supplied to the turn-signal light source and the DRL light source, so that the turn-signal light source and the DRL light source are turned on (see FIG. 2 of JP 2016-199082 A).

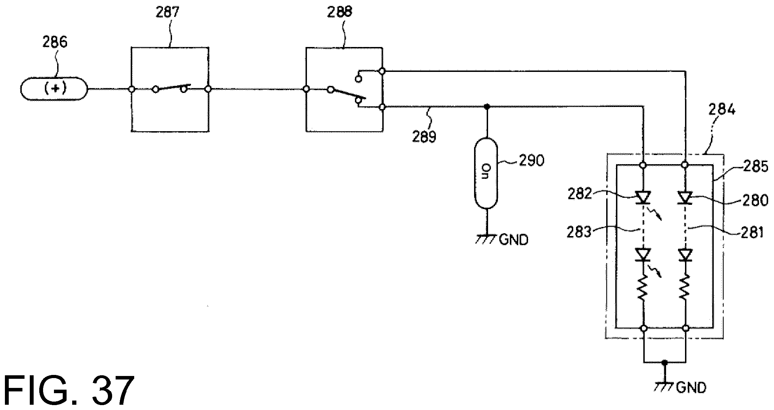

As another lighting circuit, a circuit configuration as shown in FIG. 37 is also conceivable. An LED module 285 serving as a light source of a fog lamp 284 is formed by a yellow LED group 281 formed by a series connection of a plurality of yellow LEDs 280 for emitting yellow light, and a white LED group 283 formed by a series connection of a plurality of white LEDs 282 for emitting white light. In this circuit, by switching a power supply changeover switch 288 provided after a fog lamp switch 287 from a battery 286 side, power supplied from the battery 286 side is supplied to the white LED group 283 or the yellow LED group 281, so that light of either white light or yellow light is emitted from the fog lamp 284.

In the middle of a power supply line 289 connecting the power supply changeover switch 288 and the white LED group 283, an indicator 290 for displaying the lighting of the fog lamp 284 is provided.

Incidentally, in a common fog lamp, the color of the outgoing light is defined as white light or yellow light in accordance with the UN standard, and the visibility of a driver can be enhanced by selectively outputting either white light or yellow light in accordance with the road surface condition, weather, and other external driving environment.

Therefore, in the light collecting unit 90 of the vehicular lamp disclosed in JP 2010-153269 A, white LEDs for emitting white light are arranged at respective positions of two LED chips 81, 83 out of the three LED chips 81, 82, 83 constituting the light source unit 80. At the same time, a yellow LED for emitting yellow light is disposed at the position of the LED chip 82. In this configuration, it is conceivable to selectively emit white light or yellow light by driving (lighting) and controlling either of the white LED and the yellow LED by operating the fog lamp switch (lighting color changeover switch).

However, in this case, a deviation may occur between the light distribution pattern formed by white light and the light distribution pattern formed by yellow light. In other words, the irradiation region by the white outgoing light and the irradiation region by the yellow outgoing light are different from each other, resulting in a fog lamp having poor visibility for a driver. In particularly, when the light color of the outgoing light is switched, the visibility may be remarkably lowered.

Further, the lighting circuit like that disclosed in JP 2016-199082 A has a complicated circuit configuration, so that the number of components (electric components) of the circuit is large, which leads to an increase in manufacturing cost.

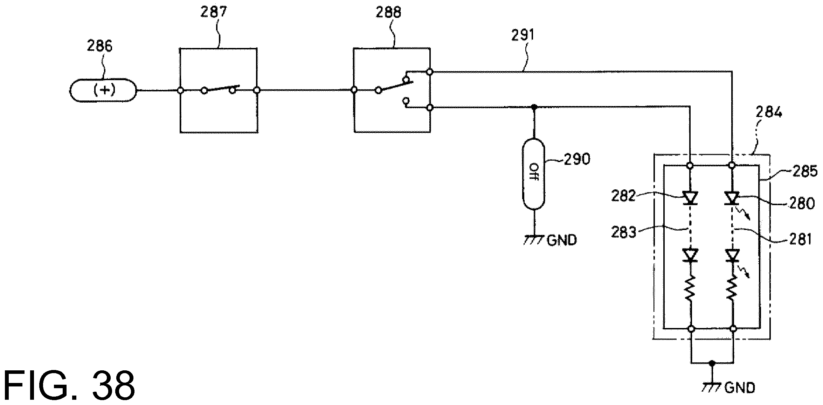

In the lighting circuit having the circuit configuration of FIG. 37, when the power supply changeover switch 288 is connected to the power supply line 289 side that is connected to the white LED group 283 (see FIG. 37), the fog lamp 284 is turned on to emit white light, and the indicator 290 displays the lighting of the fog lamp 284 ("On"). On the other hand, when the power supply changeover switch 288 is connected to the power supply line 291 side that is connected to the yellow LED group 281 (see FIG. 38), the fog lamp 284 is turned on to emit yellow light, but the turning on of the fog lamp 284 is not displayed by the indicator 290.

Furthermore, in general, a fog lamp is restricted in terms of, for example, changes in the light color and the light distribution characteristic of the outgoing light in accordance with the UN standard, and specifically, the UN standard prohibits continuous changes in the light color and the light distribution characteristic of the outgoing light.

DE 10 2010 056313 A1 discloses a lighting device which has two light sources for emitting light and a header optics for bundling the light emitted from the light sources. Each of the light sources is assigned one of the light distributions. The two light sources are assigned a common header optics, where the header optics in regions has divided surfaces with breaking or totally reflective properties.

US 2014/085920 A1 discloses an optical module, in particular for a lighting and/or indicating device for a vehicle, comprises a lens at least two light sources, in particular two LEDs, arranged facing the same face of the lens, and means for controlling the lighting-up of at least one of the sources independently of the other.

EP 2 161 494 A1 discloses a lighting device for a motor vehicle. The device has lighting units e.g. LEDs such as multimedia LEDs, with different light functions. The lighting units couple lights together into a light conducting element. The light conducting element includes a light emitting surface to provide different light functions. The lighting units are arranged on a lighting unit carrier. The lighting units emit light of different colors to be distinguishable from each other. The light functions are designed as daylight running lamp functions and/or as position light functions, and the other light functions are designed as turn-signal indicator for direction indication.

WO 2015/081974 A1 relates to an LED module for a headlamp of a vehicle. The LED module comprises a carrier and at least one first LED and at least one second LED arranged on the carrier. The at least one first LED is configured to generate white light radiation. The at least one second LED is configured to generate yellow light radiation. The LED module is configured in such a way that the at least one first LED and the at least one second LED are independently operable. Also disclosed is a lighting system for a vehicle comprising an LED module.

### Summary

The present invention was devised in view of these and other problems and features in association with the conventional art. According to the present invention, a vehicular lamp is provided as set forth in claims 1 and 2. Preferred embodiments of the present invention may be gathered from the dependent claims. Thus, there can be provided a vehicular lamp such as a fog lamp having good visibility for a driver by irradiating a substantially identical region with white outgoing light and yellow outgoing light, in other words, by forming substantially identical light distribution patterns with white outgoing light and also with yellow outgoing light.

Furthermore, there can be provided a vehicular lamp such as a fog lamp capable of realizing a switching mode of a color or a light distribution characteristic of outgoing light satisfying the UN standard by a simple circuit configuration, and improving visibility of a driver by irradiating light having an appropriate color (white light or yellow light) or light distribution characteristic according to an external driving environment such as a road surface condition or weather.

### Advantageous Effects of Invention

According to the present invention, even-numbered lenses having the same shape and size and formed of the same material are integrally formed side by side to form the inner lens, and the LEDs of different light emission colors are located at respective line symmetric positions with a symmetric axis which is a bisector in the lateral direction of each of the lenses constituting the inner lens. At the same time, the LEDs of the same emission color, white, are located at respective line symmetric positions with the symmetric axis which is the bisector in the lateral direction of the inner lens. Furthermore, all the LEDs are arranged so as to be positioned on approximately the bisector of the inner lens in the vertical direction.

This configuration can provide the light distribution pattern formed by the white outgoing light and the light distribution pattern formed by the yellow outgoing light becoming substantially the same light distribution pattern, and as a result, provide a fog lamp with good visibility for a driver.

Further, according to the present invention, the lighting control circuit can be provided with the first relay for energizing/de-energizing electric power from a battery, the second relay for switching the electric power supplied to the first relay to any of the LED groups of the two circuit in parallel composed of the series connection circuits of the plurality of LEDs, and the three-contact type changeover switch for switching the lighting of the LED groups different from each other by controlling the energization of the respective coil portions of the first relay and the second relay with the non-lighting interposed therebetween.

As a result, the switching mode of the color or the light distribution characteristic of the outgoing light satisfying the UN standard can be realized by a simple circuit configuration, and the visibility of a driver can be enhanced by irradiating light with an appropriate color (white light or yellow light) or light distribution characteristic depending on the external driving environment such as the road surface condition, the weather, or the like.

### Brief Description of Drawings

FIG. 1 is a front view of a fog lamp for an automobile according to a first embodiment of the present invention.
FIG. 2 is a plan view of the fog lamp for an automobile according to the first embodiment of the present invention.
FIG. 3 is a side view of the fog lamp for an automobile according to the first embodiment of the present invention.
FIG. 4 is a ray tracking diagram of white light whose light distribution is controlled by a right monocular lens.
FIG. 5 is a diagram showing a light distribution pattern formed by the white light whose light distribution is controlled by the right monocular lens.
FIG. 6 is a ray tracking diagram of white light whose light distribution is controlled by a left monocular lens.
FIG. 7 is a diagram showing a light distribution pattern formed by the white light whose light distribution is controlled by the left monocular lens.
FIG. 8 is a ray tracking diagram of white light whose light distribution is controlled by an inner lens.
FIG. 9 is a diagram showing a light distribution pattern formed by the white light whose light distribution is controlled by the inner lens.
FIG. 10 is a ray tracking diagram of yellow light whose light distribution is controlled by the right monocular lens.
FIG. 11 is a diagram showing a light distribution pattern formed by the yellow light whose light distribution is controlled by the right monocular lens.
FIG. 12 is a ray tracking diagram of yellow light whose light distribution is controlled by the left monocular lens.
FIG. 13 is a diagram showing a light distribution pattern formed by the yellow light whose light distribution is controlled by the left monocular lens.
FIG. 14 is a ray tracking diagram of yellow light whose light distribution is controlled by the inner lens.
FIG. 15 is a diagram showing a light distribution pattern formed by the yellow light whose light distribution is controlled by the inner lens.
FIG. 16 is a front view of a fog lamp for an automobile according to a second embodiment of the present invention.
FIG. 17 is a diagram showing a light distribution pattern formed by white light whose light distribution is controlled by left and right monocular lenses.
FIG. 18 is a diagram showing a light distribution pattern formed by white light whose light distribution is controlled by a center monocular lens.
FIG. 19 is a ray diagram of white light whose light distribution is controlled by an inner lens.
FIG. 20 is a front view of a fog lamp for an automobile according to a modified example of the second embodiment of the present invention.
FIG. 21 is a diagram showing a light distribution pattern formed by yellow light whose light distribution is controlled by left and right monocular lenses.
FIG. 22 is a diagram showing a light distribution pattern formed by yellow light whose light distribution is controlled by a center monocular lens.
FIG. 23 is a ray diagram of yellow light whose light distribution is controlled by an inner lens.
FIG. 24 is a front view of a fog lamp for an automobile according to a third embodiment of the present invention.
FIG. 25 is a diagram showing a light distribution pattern formed by light whose light distribution is controlled by an inner lens.
FIG. 26 is an explanatory view of an optical path using a cross-sectional view taken along line B-B in FIG. 1.
FIG. 27 is an explanatory view of a light shielding member.
FIG. 28 is an explanatory view of a light shielding member.
FIG. 29 is a diagram describing a conventional lamp.
FIG. 30 is a circuit diagram showing a lighting control circuit of a fog lamp for an automobile according to a fourth embodiment of the present invention.
FIG. 31 is a circuit diagram showing the lighting control circuit when a white LED group is turned on (display "On").
FIG. 32 is a circuit diagram showing the lighting control circuit when the white LED group and yellow LED group are not turned on (display "Off').
FIG. 33 is a circuit diagram showing the lighting control circuit when the yellow LED group is turned on (display "On").
FIG. 34 is a circuit diagram showing a lighting control circuit, illustrating a case where a white lighting indicator is activated when the white LED is turned on (display "On(W)" while "Off').
FIG. 35 is a circuit diagram showing the lighting control circuit, illustrating a case where a yellow lighting indicator is activated when the yellow LED is turned on (display "On(Y)" while "Off").
FIG. 36 is a circuit diagram showing a lighting control circuit of a fog lamp for an automobile according to a fifth embodiment of the present invention.
FIG. 37 is a circuit diagram showing a conventional lighting circuit.
FIG. 38 is a circuit diagram showing the conventional lighting circuit.

### Description of Exemplary Embodiments

A description will now be made below to a vehicular lamp according to the present invention in detail with reference to the accompanying drawings in accordance with exemplary embodiments. In the drawings, the same or similar components may be denoted by the same reference numeral.

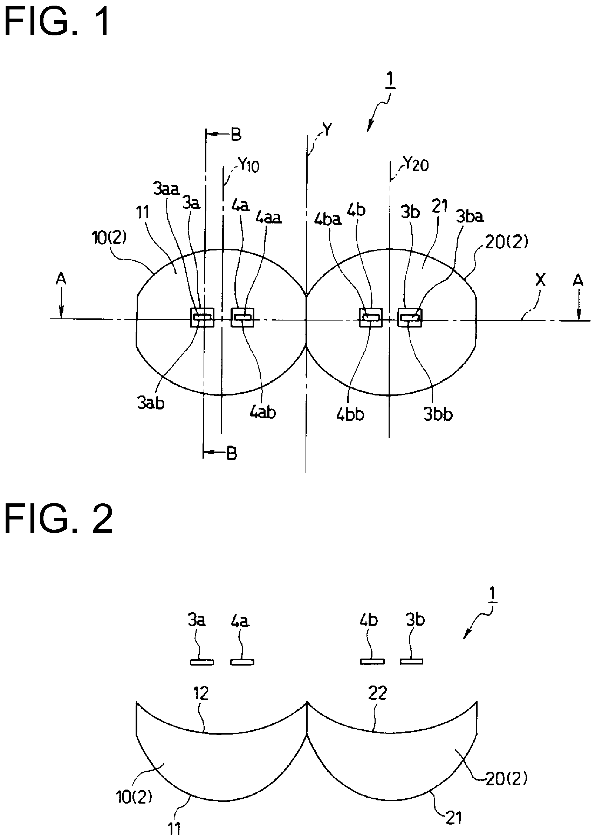

FIGS. 1, 2, and 3 are a front view, a plan view, and a side view of a fog lamp for an automobile according to a first embodiment of the present invention, respectively.

In the following description, the directions of "lateral", "upper", "lower", "left", "right", "front" and "rear" as well as related terms indicate the directions when a driver sitting in place views a fog lamp mounted on the front of the vehicle body.

A vehicular lamp according to the present invention includes an optical system having an LED(s) serving as a light source and an inner lens for performing light distribution control of light emitted from the LED.

The optical system 1 of the fog lamp according to a first embodiment can have an inner lens 2, white LEDs 3a and 3b, and yellow LEDs 4a and 4b. The inner lens 2 is configured to have a two-lens lens configuration in which two monocular lenses having the same shape and size and formed of the same material, one of which is a right-side monocular lens 10 and the other of which is a left-side monocular lens 20, and which are integrally arranged laterally. The white LED 3a is arranged on the rear right side of the right-side monocular lens 10 and the yellow LED 4a is arranged on the rear left side thereof. The yellow LED 4b is arranged on the rear right side of the left-side monocular lens 20 and the white LED 3b is arranged on the rear left side thereof.

Each of the monocular lens 10 and the monocular lens 20 constituting the inner lens 2 is composed of a meniscus lens in which a front surface (light emitting surface) 11, 21 is composed of an aspherical convex surface, and a back surface (light incident surface) 12, 22 is composed of an aspherical concave surface.

The white LED 3a and the yellow LED 4a each have a light emitting surface 3aa, 4aa (front side) with its lower end 3ab, 4ab, and are arranged behind the monocular lens 10 so that the lower ends 3ab and 4ab of the light emitting surfaces 3aa and 4aa are positioned on a center line (bisector) X of the inner lens 2 with respect to the vertical direction when viewed from the front of the light emitting surface 11. Similarly, the white LED 3b and the yellow LED 4b each have a light emitting surface 3ba, 4ba (front side) with its lower end 3bb, 4bb, and are arranged behind the monocular lens 20 so that the lower ends 3bb and 4bb of the light emitting surfaces 3ba and 4ba are positioned on the center line (bisector line) X of the inner lens 2 with respect to the vertical direction when viewed from the front of light emitting surface 21.

At the same time, the white LED 3a and the yellow LED 4a are arranged such that the centers of the respective light emitting surfaces 3aa and 4aa in the lateral direction are symmetrically positioned relative to a center line (bisector) Y₁₀ of the monocular lens 10 with respect to the lateral direction. Similarly, the white LED 3b and yellow LED 4b are arranged such that the centers of the respective light emitting surfaces 3ba and 4ba in the lateral direction are symmetrically positioned relative to a center line (bisector) Y₂₀ of the monocular lens 20 with respect to the lateral direction.

In addition, the lateral center line Y₁₀ of the monocular lens 10 and the lateral center line Y₂₀ of the monocular lens 20 are positioned symmetrically with respect to a center line Y of the inner lens 2 with respect to the lateral direction. Thus, the white LED 3a and the white LED 3b are positioned symmetrically with respect to the center line Y of the inner lens 2, and similarly, the yellow LED 4a and the yellow LED 4b are positioned symmetrically with respect to the center line Y of the inner lens 2.

Furthermore, in the present embodiment, the yellow LED 4a is positioned on the side closer to the center line Y of the inner lens 2, and the white LED 3a is positioned on the side opposed to the center line Y, with the center line Y₁₀ of the monocular lens 10 interposed between the yellow LED 4a and the white LED 3a. At the same time, the yellow LED 4b is positioned on the side closer to the center line Y of the inner lens 2, and the white LED 3b is positioned on the side opposed to the center line Y with the center line Y₂₀ of the monocular lens 20 interposed between the yellow LED 4b and the white LED 3b.

In the optical system having the aforementioned configuration, a description will now be given of a comparison of an optical path tracking diagram of light emitted from each LED and controlled by the inner lens in terms of light distribution with a light distribution pattern formed by the light controlled in light distribution. The ray tracing diagram shows the locus of the light rays traveling along the A-A cross section of the inner lens 2, and the light distribution pattern shows a light distribution pattern formed by the irradiation light irradiated on a virtual vertical screen assumed to be disposed in front of the inner lens.

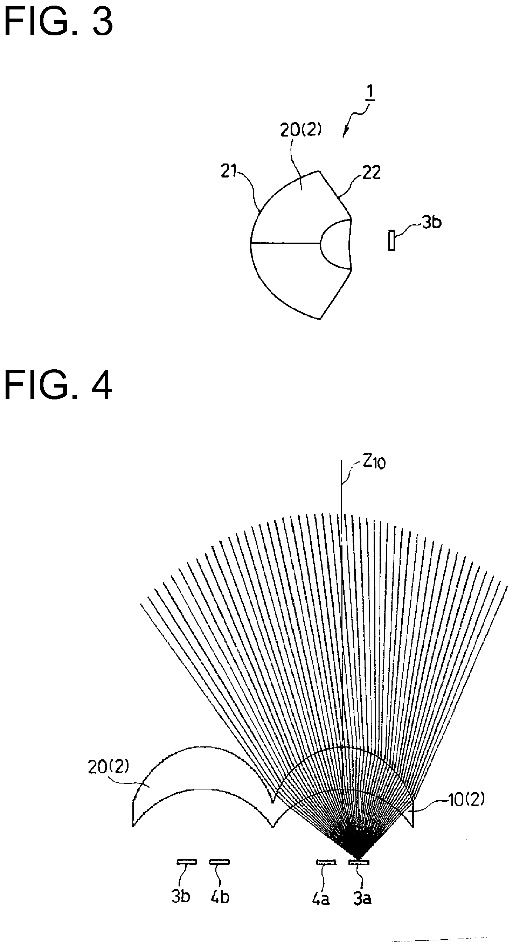

First, as shown in FIG. 4, the light (light rays) is emitted radially from the white LED 3a located on the right side out of the white LED 3a and the white LED 3b and passes through the monocular lens 10 constituting the inner lens 2 - which is positioned on the right side of the monocular lens 20 - so as to be subjected to light distribution control. Then, the light is refracted in the condensing direction to such an extent that the respective light rays do not cross each other, and at the same time, the light path forming area of the light rays is asymmetric with respect to a central axis Z₁₀ extending in a front-rear direction of the monocular lens 10 and is offset (expanded) to the left side.

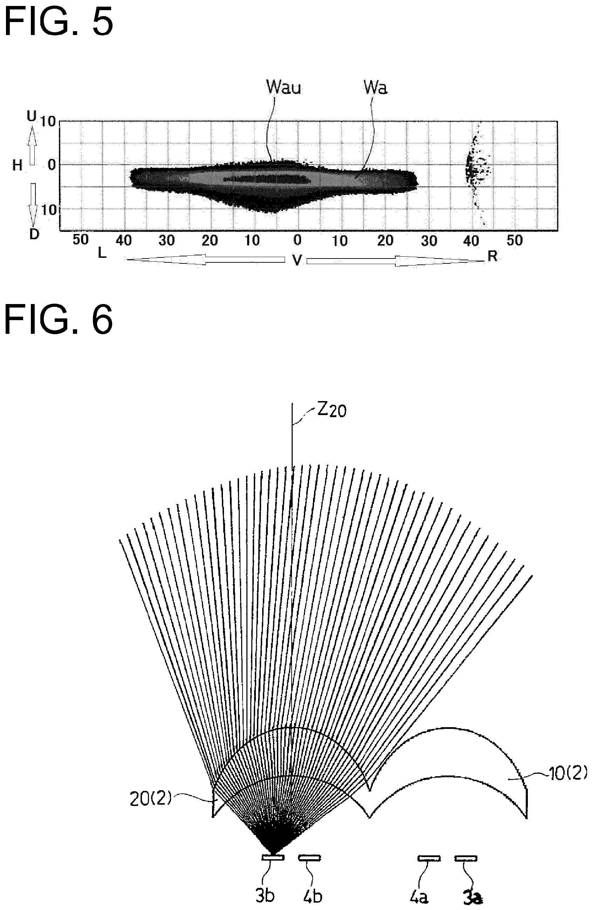

In this configuration, the light distribution pattern formed on the virtual vertical screen by the light emitted from the white LED 3a and subjected to the light distribution control by the monocular lens 10 has the shape shown in FIG. 5. In this case, in the virtual vertical screen, a straight line in which the horizontal plane including the center line X of the inner lens 2 intersects with the virtual vertical screen is set as a horizontal reference line H serving as a reference line in the vertical direction, and a straight line in which the vertical plane including the center line Y of the inner lens 2 in the lateral direction intersects with the virtual vertical screen is set as a vertical reference line V serving as a reference line in the horizontal direction.

As shown in FIG. 5, in the horizontal direction, the light distribution pattern Wa formed on the virtual vertical screen is formed at a position that is offset leftward with respect to the vertical reference line V reflecting that the light path forming area of the light (light rays) whose light distribution is controlled by the monocular lens 10 is offset leftward with respect to the central axis Z₁₀ of the monocular lens 10.

Regarding the light distribution pattern Wa in the vertical direction, an upper end Wau of the light distribution pattern Wa is positioned at the position substantially corresponding to the horizontal reference line H and formed below from that position. The upper end Wau of the light distribution pattern Wa can form a cut-off line, and be formed by projecting an image of the lower end 3ab of the light emitting surface 3aa of the white LED 3a.

On the other hand, as shown in FIG. 6, the light (light rays) is emitted radially from the white LED 3b located on the left side out of the white LED 3a and the white LED 3b and passes through the monocular lens 20 constituting the inner lens 2 - which is positioned on the left side of the monocular lens 10 - so as to be subjected to light distribution control. Then, the light is refracted in the condensing direction to such an extent that the respective light rays do not cross each other, and at the same time, the light path forming area of the light rays is asymmetric with respect to a central axis Z₂₀ extending in a front-rear direction of the monocular lens 20 and is offset (expanded) to the right side.

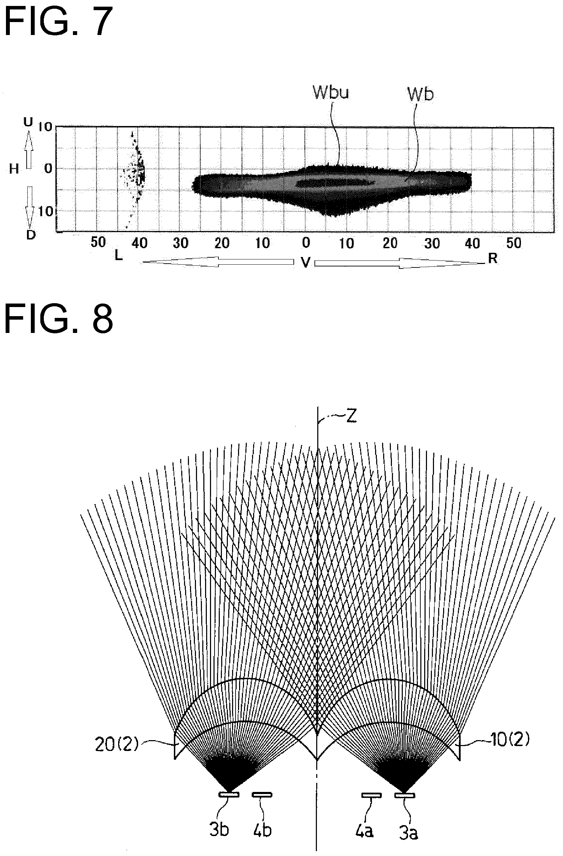

In this configuration, the light distribution pattern formed on the virtual vertical screen by the light emitted from the white LED 3b and subjected to the light distribution control by the monocular lens 20 has the shape shown in FIG. 7.

As shown in FIG. 7, in the horizontal direction, the light distribution pattern Wb formed on the virtual vertical screen is formed at a position that is offset rightward with respect to the vertical reference line V reflecting that the light path forming area of the light (light rays) whose light distribution is controlled by the monocular lens 20 is offset rightward with respect to the central axis Z₂₀ of the monocular lens 20.

Regarding the light distribution pattern Wb in the vertical direction, an upper end Wbu of the light distribution pattern Wb is positioned at the position substantially corresponding to the horizontal reference line H and formed below from that position. The upper end Wbu of the light distribution pattern Wb can form a cut-off line, and be formed by projecting an image of the lower end 3bb of the light emitting surface 3ba of the white LED 3b.

Therefore, the light (light rays) emitted from the white LED 3a and controlled in light distribution by passing through the monocular lens 10 and the light (light rays) emitted from the white LED 3b and controlled in light distribution by passing through the monocular lens 20 are combined to form an optical path forming area. As shown in FIG. 8, the optical path forming area is positioned (formed) in a substantially symmetrical range with respect to the central axis Z of the inner lens 2 extending in the front-rear direction thereof.

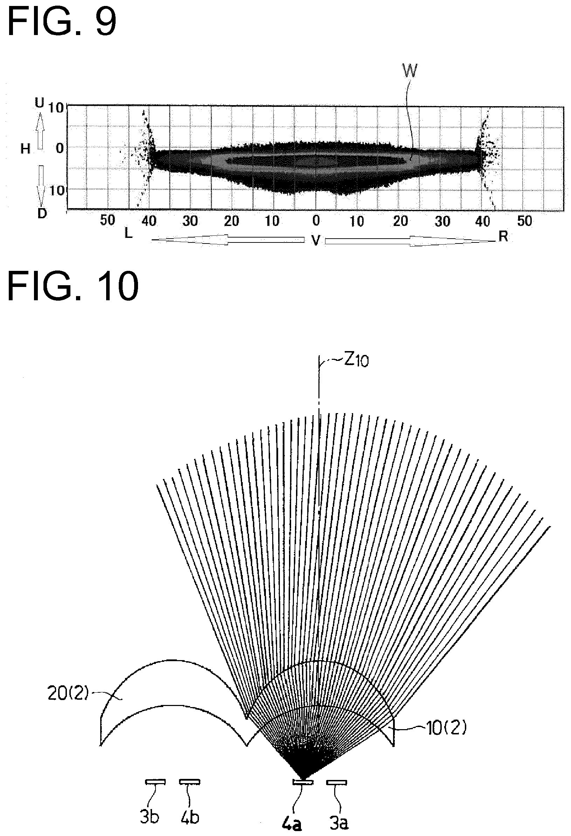

Accordingly, the light distribution pattern W can be formed by the mixed light of the white light emitted from the white LED 3a and controlled by the monocular lens 10 and the white light emitted from the white LED 3b and controlled by the monocular lens 20, i.e., by superimposing the light distribution pattern Wa shown in FIG. 5 and the light distribution pattern Wb shown in FIG. 7 over each other (see FIG. 9).

As can be seen from FIG. 9, the light distribution pattern W formed of white light has a shape substantially symmetrical with respect to the vertical reference line V. Therefore, the driving safety is enhanced as light having good visibility for a driver.

Regarding the yellow light, as in the case of the white LED 3a and the white LED 3b, as shown in FIG. 10, the light (light rays) is emitted radially from the yellow LED 4a located on the right side out of the yellow LED 4a and the yellow LED 4b and passes through the monocular lens 10 constituting the inner lens 2 - which is positioned on the right side of the monocular lens 20 - so as to be subjected to light distribution control. Then, the light is refracted in the condensing direction to such an extent that the respective light rays do not cross each other, and at the same time, the light path forming area of the light rays is asymmetric with respect to the central axis Z₁₀ extending in the front-rear direction of the monocular lens 10 and is offset (expanded) to the right side.

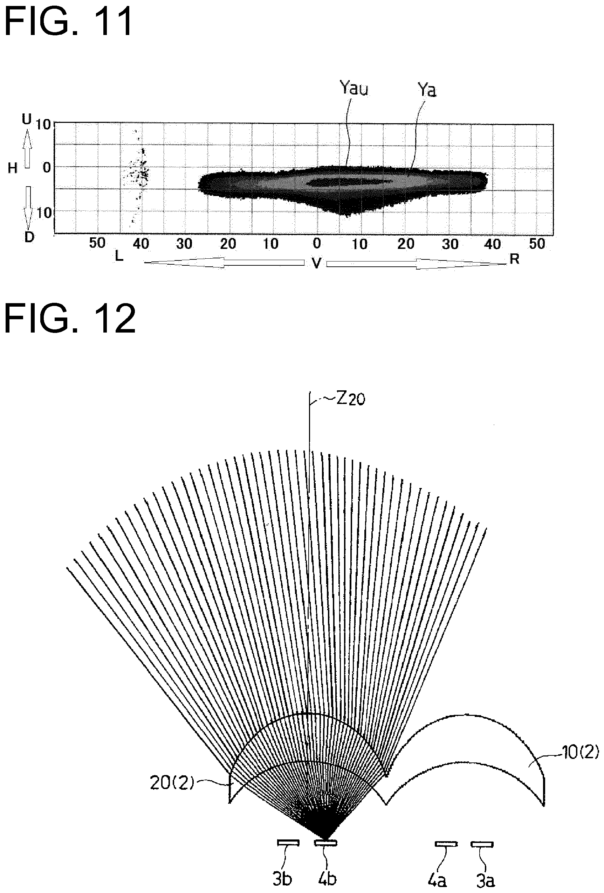

In this configuration, the light distribution pattern formed on the virtual vertical screen by the light emitted from the yellow LED 4a and subjected to the light distribution control by the monocular lens 10 has the shape shown in FIG. 11.

As shown in FIG. 10, in the horizontal direction, the light distribution pattern Ya formed on the virtual vertical screen is formed at a position that is offset rightward with respect to the vertical reference line V reflecting that the light path forming area of the light (light rays) whose light distribution is controlled by the monocular lens 10 is offset rightward with respect to the central axis Z₁₀ of the monocular lens 10.

Regarding the light distribution pattern Ya in the vertical direction, an upper end Yau of the light distribution pattern Ya is positioned at the position substantially corresponding to the horizontal reference line H and formed below from that position. The upper end Yau of the light distribution pattern Ya can form a cut-off line, and be formed by projecting an image of the lower end 4ab of the light emitting surface 4aa of the yellow LED 4a.

On the other hand, as shown in FIG. 12, the light (light rays) is emitted radially from the yellow LED 4b located on the left side out of the yellow LED 4a and the yellow LED 4b and passes through the monocular lens 20 constituting the inner lens 2 - which is positioned on the left side of the monocular lens 10 - so as to be subjected to light distribution control. Then, the light is refracted in the condensing direction to such an extent that the respective light rays do not cross each other, and at the same time, the light path forming area of the light rays is asymmetric with respect to the central axis Z₂₀ extending in the front-rear direction of the monocular lens 20 and is offset (expanded) to the left side.

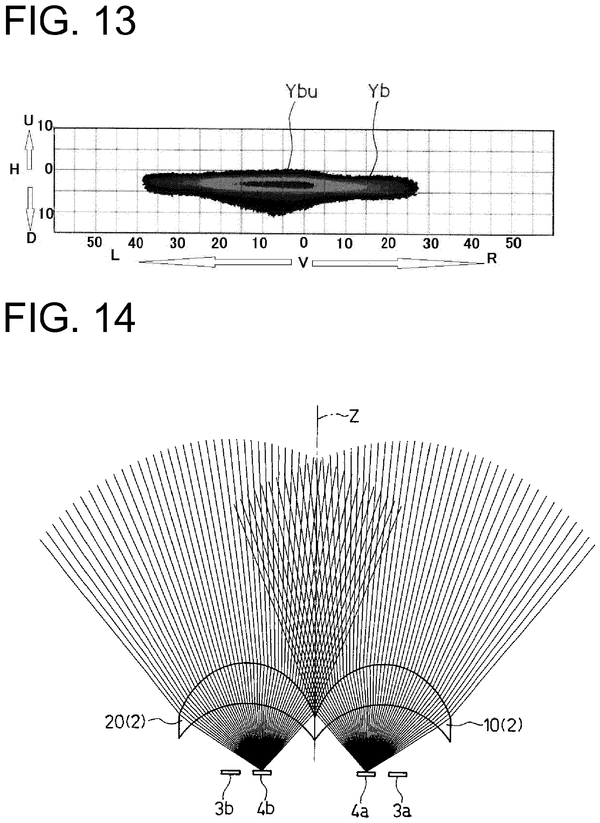

In this configuration, the light distribution pattern formed on the virtual vertical screen by the light emitted from the yellow LED 4b and subjected to the light distribution control by the monocular lens 20 has the shape shown in FIG. 13.

As shown in FIG. 13, in the horizontal direction, the light distribution pattern Yb formed on the virtual vertical screen is formed at a position that is offset leftward with respect to the vertical reference line V reflecting that the light path forming area of the light (light rays) whose light distribution is controlled by the monocular lens 20 is offset leftward with respect to the central axis Z₂₀ of the monocular lens 20.

Regarding the light distribution pattern Yb in the vertical direction, an upper end Yb_{U} of the light distribution pattern Yb is positioned at the position substantially corresponding to the horizontal reference line H and formed below from that position. The upper end Ybu of the light distribution pattern Yb can form a cut-off line, and be formed by projecting an image of the lower end 4bb of the light emitting surface 4ba of the yellow LED 4b.

Therefore, the light (light rays) emitted from the yellow LED 4a and controlled in light distribution by passing through the monocular lens 10 and the light (light rays) emitted from the yellow LED 4b and controlled in light distribution by passing through the monocular lens 20 are combined to form an optical path forming area. As shown in FIG. 14, the optical path forming area is positioned (formed) in a substantially symmetrical range with respect to the central axis Z of the inner lens 2 extending in the front-rear direction thereof.

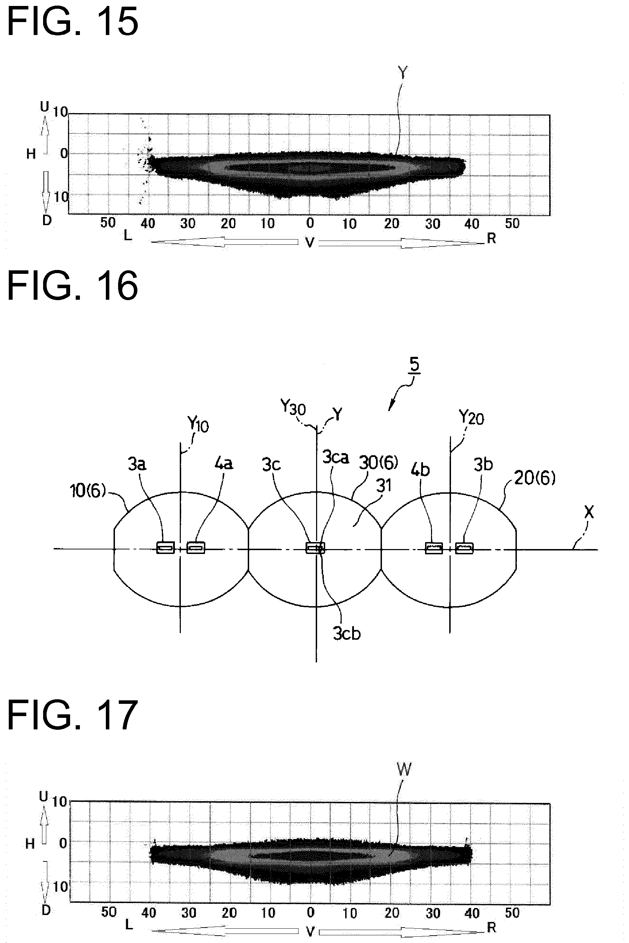

Accordingly, the light distribution pattern Y can be formed by the mixed light of the yellow light emitted from the yellow LED 4a and controlled by the monocular lens 10 and the yellow light emitted from the yellow LED 4b and controlled by the monocular lens 20, i.e., by superimposing the light distribution pattern Ya shown in FIG. 11 and the light distribution pattern Yb shown in FIG. 13 over each other (see FIG. 15).

As can be seen from FIG. 15, the light distribution pattern Y formed of yellow light has a shape substantially symmetrical with respect to the vertical reference line V. Therefore, the driving safety is enhanced as light having good visibility for a driver.

In addition, when comparing the light distribution pattern W (see FIG. 9) formed by white light and the light distribution pattern Y (see FIG. 15) formed by yellow light, they are formed in substantially the same shape and size at substantially the same position on the virtual vertical screen. Therefore, even if either the white light or the yellow light is selectively emitted (switched) in accordance with the road surface condition, weather, or other external driving environment, the light distribution characteristics are substantially the same, so that the driver does not feel uncomfortable and the lamp can contribute to the improvement of the driving safety.

In a modified example of this embodiment, it is possible to change the positions of the white LED and the yellow LED with respect to the optical system having the above-described configuration. Specifically, the yellow LED 4a is disposed at the position of the white LED 3a and the white LED 3a is disposed at the position of the yellow LED 4a with respect to the right monocular lens 10. Similarly, the yellow LED 4b is disposed at the position of the white LED 3b and the white LED 3b is disposed at the position of the yellow LED 4b with respect to the left monocular 20.

In this case, the light distribution pattern formed by the white light and the light distribution pattern formed by the yellow light are interchanged, but since both light distribution patterns are formed at substantially the same position on the virtual straight-line screen and have substantially the same shape and size, there is almost no optical difference.

Next, a description will be given of a second embodiment of a vehicular lamp according to the present invention. FIG. 16 is a front view of the optical system of the fog lamp according to the second embodiment.

The optical system 5 of the fog lamp according to the second embodiment can include an inner lens 6 that is composed of three monocular lenses having the same shape and size and formed of the same material. They are a right monocular lens 10, a center monocular lens 30, and a left monocular lens 20, which are integrally disposed laterally with each other.

In this configuration, regarding the monocular lens 10 positioned on the right side, a white LED 3a and a yellow LED 4a are arranged at the same positions as those in the monocular lens 10 of the first embodiment. Regarding the monocular lens 20 positioned on the right side, a white LED 3b and a yellow LED 4b are arranged at the same positions as those in the monocular lens 20 of the first embodiment. In this second embodiment, another white LED 3c is disposed behind the added center monocular lens 30.

The white LED 3c has a light emitting surface 3ca (front side) with its lower end 3cb, and is arranged behind the monocular lens 30 so that the lower end 3cb of the light emitting surface 3ca is positioned on a center line (bisector) X of the inner lens 6 with respect to the vertical direction when viewed from the front of the light emitting surface 31. At the same time, the white LED 3c is arranged such that the center of the light emitting surface 3ca thereof is positioned on the center line Y (bisector) of the inner lens 6 with respect to the lateral direction.

The center line (bisector) Y in the lateral direction of the inner lens 2 is located on the same position as the center line (bisector) Y₃₀ of the monocular lens 30 in the lateral direction.

Therefore, the light (light rays) emitted from the white LED 3a and controlled in light distribution by passing through the monocular lens 10 and the light (light rays) emitted from the white LED 3b and controlled in light distribution by passing through the monocular lens 20 can form a light distribution pattern W as shown in FIG. 17, which has a shape substantially symmetrical with respect to the vertical reference line V.

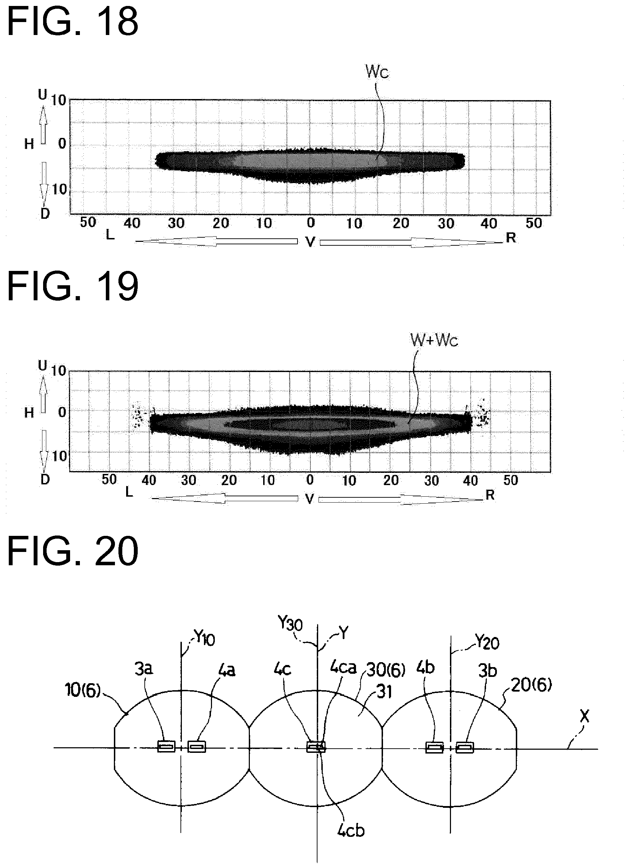

Furthermore, light (light rays) emitted from the white LED 3c and controlled in light distribution by passing through the center monocular lens 30 can form a light distribution pattern Wc as shown in FIG. 18, which has a shape substantially symmetrical with respect to the vertical reference line V.

Therefore, the combined light distribution pattern (W + Wc) formed by the emitted light of the three white LEDs 3a, 3b, and 3c is substantially symmetrical with respect to the vertical reference line V as shown in FIG. 19.

In this case, the light distribution pattern formed by the outgoing light of the white LED 3c is superimposed on the light distribution pattern formed by the outgoing light of the two white LEDs 3a and 3b. As a result, the luminous intensity distribution of the light distribution pattern by the white light is increased and the visibility of the driver is increased, thereby improving the safety of driving.

In a modified example of this embodiment, one yellow LED 4c may be disposed in place of the white LED 3c at the position of the white LED 3c behind the added center monocular lens 30.

FIG. 20 shows this modified example. As shown, the yellow LED 4c has a light emitting surface 4ca with its lower end 4cb, and is arranged behind the monocular lens 30 so that the lower end 4cb of the light emitting surface 4ca is positioned on the center line (bisector) X of the inner lens 6 with respect to the vertical direction when viewed from the front of the light emitting surface 31. At the same time, the yellow LED 4c is arranged such that the center of the light emitting surface 4ca is positioned on the center line (bisector) Y of the inner lens 2 with respect to the lateral direction.

Herein, the center line (bisector) Y in the lateral direction of the inner lens 2 is located at the same position as the center line (bisector) Y₃₀ of the monocular lens 30 with respect to the lateral direction.

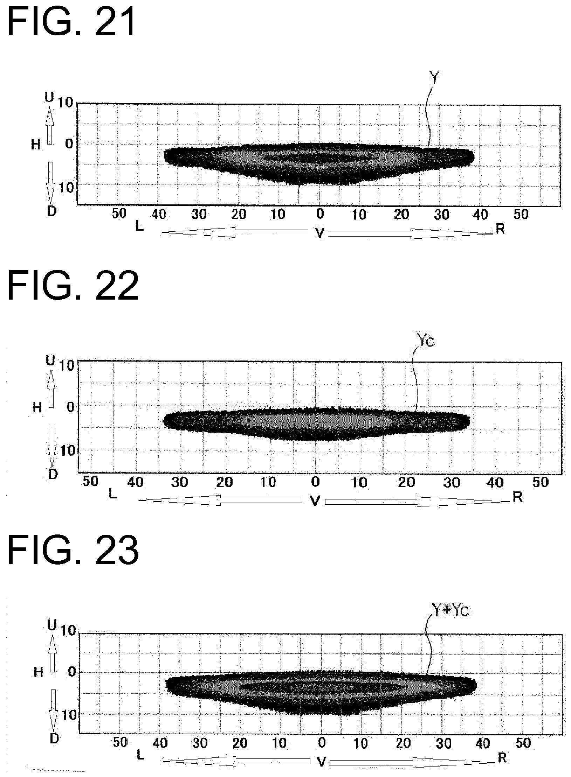

Therefore, the light (light rays) emitted from the yellow LED 4a and controlled in light distribution by passing through the monocular lens 10 and the light (light rays) emitted from the yellow LED 4b and controlled in light distribution by passing through the monocular lens 20 can form a light distribution patterns Y as shown in FIG. 21, which has a shape substantially symmetrical with respect to the vertical reference line V.

Furthermore, light (light rays) emitted from the yellow LED 4c and controlled in light distribution by passing through the center monocular lens 30 can form a light distribution pattern Yc as shown in FIG. 22, which has a shape substantially symmetrical with respect to the vertical reference line V.

Therefore, the combined light distribution pattern (Y + Yc) formed by the emitted light of the three yellow LEDs 4a, 4b, and 4c is substantially symmetrical with respect to the vertical reference line V as shown in FIG. 23.

In this case, the light distribution pattern formed by the outgoing light of the yellow LED 4c is superimposed on the light distribution pattern formed by the outgoing light of the two yellow LEDs 4a and 4b. As a result, the luminous intensity distribution of the light distribution pattern by the yellow light is increased and the visibility of the driver is increased, thereby improving the safety of driving.

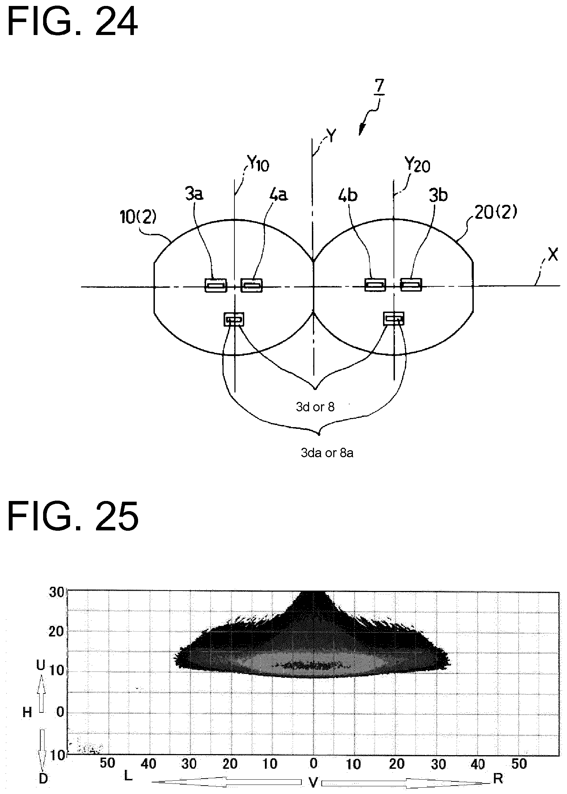

Next, a description will be given of a third embodiment of a vehicular lamp according to the present invention. FIG. 24 is a front view of the optical system of the fog lamp according to the third embodiment.

The optical system 7 of the fog lamp according to the third embodiment can include white LEDs 3d or blue LEDs 8 which are additionally disposed on the rear of the right monocular lens 10 and the rear of the left monocular lens 20 with respect to the above-described optical system of the first embodiment, respectively.

The white LEDs 3d or blue LEDs 8 each have a light emitting surface 3da or 8a, and are arranged on the center line (bisector) Y₁₀ of the monocular lens 10 and on the center line (bisector) Y₂₀ of the monocular lens 20, with respect to the lateral direction, so that the light emitting surface 3da or 8a is positioned lower than the center line (bisector) X of the inner lens 2 with respect to the vertical line.

FIG. 25 shows a light distribution pattern formed by the outgoing light of three white LEDs 3a, 3b, and 3d, which is substantially symmetrical with respect to the vertical reference line V. It should be noted that a light distribution pattern formed by the outgoing light of the white LED 3a, the white LED 3b, and the blue LED 8, a light distribution pattern formed by the outgoing light of the yellow LED 4a, the yellow LED 4b, and the white LED 3d, and a light distribution pattern formed by the outgoing light of the yellow LED 4a, the yellow LED 4b, and the blue LED 8 are also formed in substantially the same manner and have the same or similar light distribution.

The aforementioned configuration can provide a function as an accessory lamp or as a fog lamp.

In the first embodiment, the arrangement of the white LED 3a, the white LED 3b, the yellow LED 4a, and the yellow LED 4b is made such that the lower ends 3ab, 3bb, 4ab, and 4bb of the respective light emitting surfaces are positioned on the center line (bisector) X of the inner lens 2 in the vertical direction, so that images of the lower ends of the LEDs can be projected to form a cut-off line of the light distribution pattern.

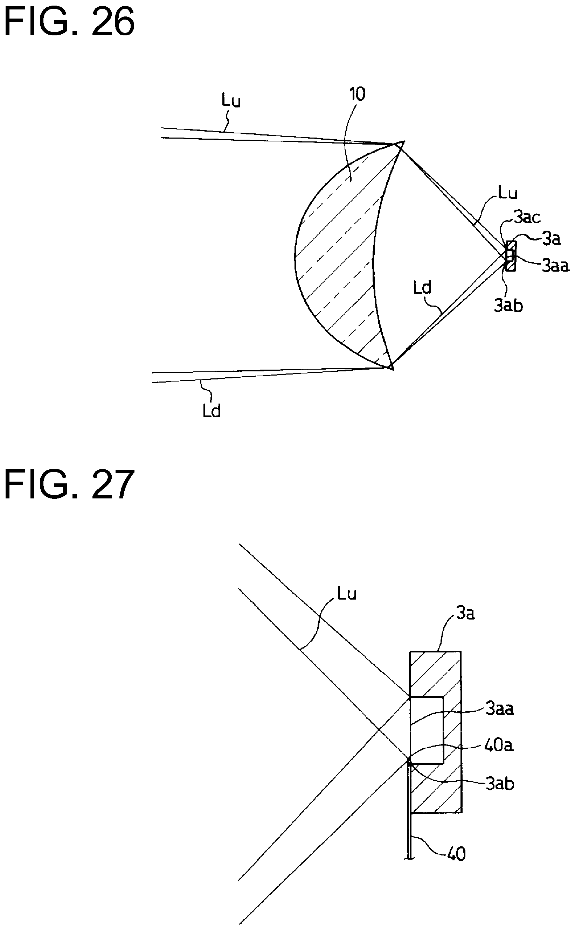

A description will now be given of the formation of the cut-off line with reference to FIG. 26. For example, regarding the optical path formation area formed by light (light rays) emitted from the white LED 3a and controlled in light distribution by passing through the monocular lens 10 in the vertical direction, an upper limit portion is formed by the light (light ray) Lu that is emitted from the lower end 3ab of the light emitting surface 3aa and transmitted through the uppermost portion of the monocular lens 10, and a lower limit portion is formed by the light (light ray) Ld that is emitted from the upper end 3ac of the light emitting surface 3aa and transmitted through the lowermost portion of the monocular lens 10.

Therefore, for example, when LEDs having light emitting surfaces with different sizes are used as the light source, the positions of the lower ends of the light emitting surfaces of the LEDs are arranged on the center line (bisector) X of the inner lens 2 in the vertical direction. As a result, the cut-off line at the upper end of the light distribution pattern is always formed at a fixed position by the light beam Lu regardless of the size of the light emitting surface. As the size of the light emitting surface increases, the light distribution pattern formed in the increased portion is formed so as to extend below the cut-off line, and the size of the entire light distribution pattern only increases to the lower side.

Therefore, in the fog lamp configured to form the light distribution by the optical system using the inner lens 2, even if LEDs having light emitting surfaces with different sizes are used, the difference in size of the light emitting surface with respect to the formed light distribution pattern affects only on the size of a portion located below the cut-off line. Therefore, even if LEDs having light emitting surfaces with different sizes are used, a lamp satisfying the standard can be realized without changing the design of the optical system using the inner lens 2.

For example, when the lower end 3ab of the light emitting surface 3aa of the white LED 3a is formed in an uneven manner without being linear, the emitted light Lu from the lower end 3ab may have a blurred edge, and the cut-off line of the light distribution pattern formed by the emitted light Lu may also be formed in a blurred condition.

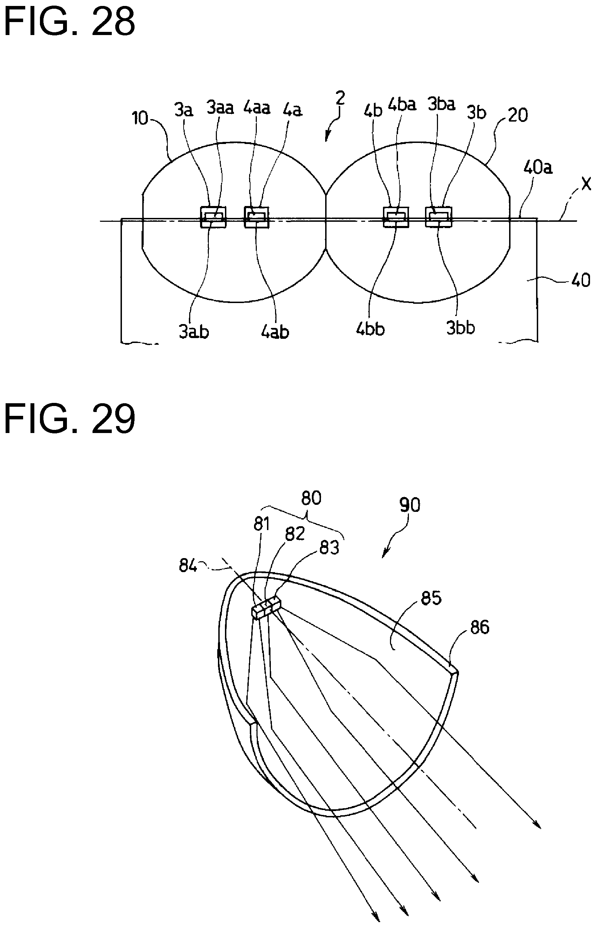

Therefore, in order to prevent this blurring, as shown in FIG. 27, a light shielding member 40 can be provided so as to extend upward from the lower side in the vicinity of the light emitting surface 3aa of the white LED 3a or in contact with the light emitting surface 3aa so that the linear upper end 40a thereof is positioned on the same line as or slightly higher than the lower end 3ab of the light emitting surface 3aa. In other words, as shown in FIG. 28, the light shielding member 40 is provided so that the upper end 40a thereof when viewed from front is positioned on the same line as the center line (bisector) X of the inner lens 2 in the vertical direction or at a position slightly higher than the center line (bisector) X in the front view.

As a result, the light emitted from the vicinity of the lower end 3ab of the light emitting surface 3aa of the white LED 3a and the vicinity of the lower end 4ab of the light emitting surface 4aa of the yellow LED 4a is shielded by the light-shielding member 40, so that a clear cut-off line can be formed by the light transmitted through the uppermost portion of the monocular lens 10. At the same time, the light emitted from the vicinity of the lower end 3bb of the light emitting surface 3ba of the white LED 3b and the vicinity of the lower end 4bb of the light emitting surface 4ba of the yellow LED 4b is shielded by the light-shielding member 40, so that a clear cut-off line can be formed by the light transmitted through the uppermost portion of the monocular lens 20.

The inner lens may be formed by integrally molding a plurality of monocular lenses, or may be formed by bonding individual monocular lenses for integration in a separate step.

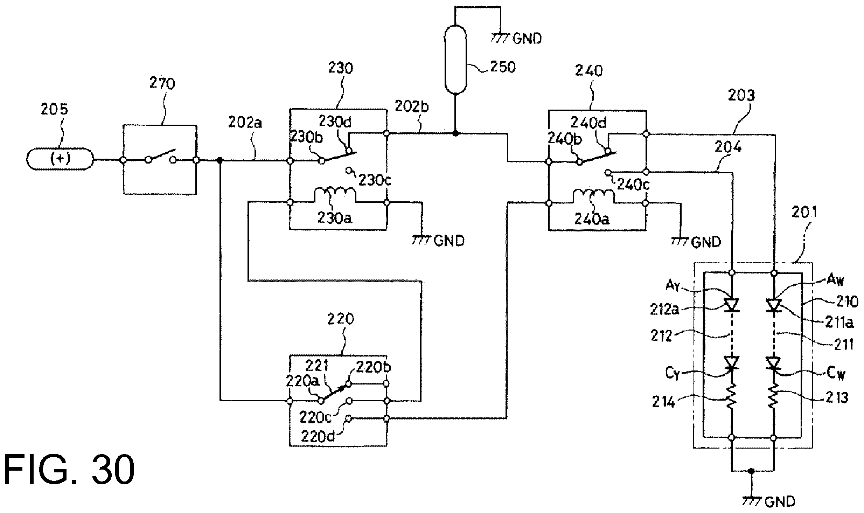

Next, an embodiment of a lighting control circuit of a vehicular lamp according to embodiments of the present invention will be described in detail below with reference to FIGs. 30 to 36. In these embodiments illustrated in the drawings, the same or similar components are denoted by the same reference numeral.

FIG. 30 is a circuit diagram showing a lighting control circuit of a vehicular lamp according to a fourth embodiment of the present invention.

The lighting control circuit includes an LED module 210 that constitutes a light source portion of a fog lamp 201 and has a two circuit configuration including one for a white LED group 211 and the other for a yellow LED group 212, a lighting color changeover switch 220 that switches a light color of light emitted from the fog lamp 201, a power supply line opening/closing relay 230 that is provided after a fog lamp switch 270 from a battery 205 side to connect or disconnect a power supply line 202a connected to the fog lamp switch 270, a power supply changeover relay 240, and a fog lamp lighting display indicator 250 that indicates lighting or not of the fog lamp 201. Herein, the power supply changeover relay 240 is provided after the power supply line opening/closing relay 230 and the fog lamp switch 270 from the battery 205 side, and can switch the connection of the power supply line 202b connected to the power supply line opening/closing relay 230 to a power supply line 203 and a power supply line 204 extending from the white LED group 211 and the yellow LED group 212 of two circuits constituting the LED module 210, respectively.

Herein, the LED module 210 includes the white LED group 211 composed of a plurality of white LEDs 211a connected in series for emitting white light, and a yellow LED group 212 composed of a plurality of yellow LEDs 212a connected in series for emitting yellow light. The white LED group 211 is connected to a current limiting resistor 213 for limiting a current flowing through the white LED group 211, and the yellow LED group 212 is connected to a current limiting resistor 214 for limiting a current flowing through the yellow LED group 212.

Herein, the white LED group 211 can include the foregoing white LEDs 3a, 3b, and 3c, whereas the yellow LED group 212 can include the foregoing yellow LEDs 4a and 4b in the first and other embodiments described above.

The lighting color changeover switch 220 is a single-pole triple throw type switch having a common contact 220a and three changeover contacts, a first changeover contact 220b, a second changeover contact 220c, and a third changeover contact 220d.

The power supply line opening/closing relay 230 has three contacts, i.e., a drive coil 230a, a common contact 230b, a normally open make contact 230c, and a normally closed break contact 230d.

The power supply changeover relay 240 has a drive coil 240a, and three contacts: a common contact 240b, a normally open make contact 240c, and a normally closed break contact 240d.

The power supply line 202a extending from the battery 205 side through the fog lamp switch 270 is connected to the common contact 230b of the power supply line changeover relay 230, the break contact 230d is connected to the common contact 240b of the power supply line changeover relay 240, and the make contact 230c of the power supply line opening/closing relay 230 is not connected to any of them.

At the same time, the power line 202a extending from the battery 205 side through the fog lamp switch 270 is also connected to the common contact 220a of the lighting color changeover switch 220, and the first switching contact 220b of the lighting color changeover switch 220 is not connected to any of them. The second switching contact 220c is connected to one end of the drive coil 230a of the power supply line opening/closing relay 230, and the other end of the drive coil 230a is connected to GND. The third switching contact 220d is connected to one end of the drive coil 240a of the power supply changeover relay 240, and the other end of the drive coil 240a is connected to GND.

The break contact 240d of the power supply changeover relay 240 is connected to an anode Aw of the white LED group 211 constituting the LED module 210 via the power supply line 203. The make contact 240c is connected to an anode A_{Y} of the yellow LED group 212 constituting the LED module 210 via the power supply line 204. Furthermore, a cathode C_{W} of the white LED group 211 is connected to GND via the current limiting resistor 213, and a cathode Cy of the yellow LED group 212 is connected to GND via the current limiting resistor 214.

The fog lamp lighting display indicator 250 is connected to the middle of the power supply line 202b connecting the break contact 230d of the power supply line changeover relay 230 and the common contact 240b of the power supply changeover relay 240.

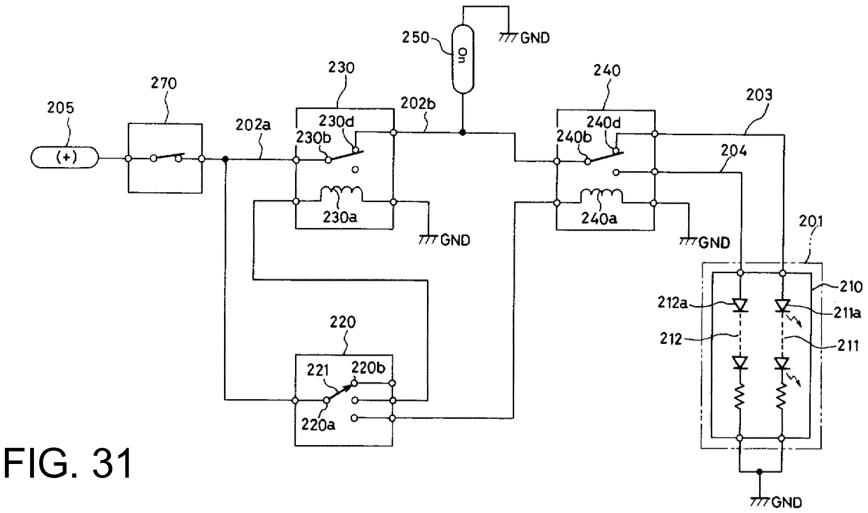

Therefore, as shown in the circuit diagram of FIG. 31, when a movable element 221 connected to the common contact 220a of the lighting color changeover switch 220 is brought into contact with the first changeover contact 220b, since the first changeover contact 220b is in the open state, a current does not flow to either the drive coil 230a of the power supply line changeover relay 230 or the drive coil 240a of the power supply changeover relay 240, so that a non-energized state is obtained. Therefore, the common contact 230b and the break contact 230d of the power supply line opening/closing relay 230 are connected, and at the same time, the common contact 240b and the break contact 240d of the power supply changeover relay 240 are connected.

As a result, electric power supplied from the battery 205 is supplied to the white LED group 211 constituting the LED modules 10 via the power supply lines 202a and 202b, and the power supply line 203 connected to the break contact 240d of the power supply changeover relay 240, so that the white LEDs 211a are turned on to emit white light from the fog lamp 201.

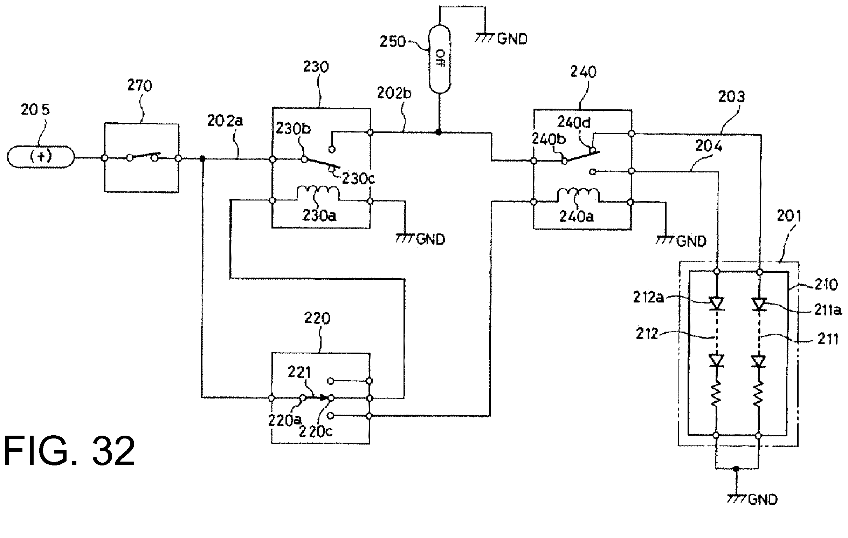

Further, as shown in the circuit diagram of FIG. 32, when the movable element 221 connected to the common terminal 220a of the lighting color changeover switch 220 is brought into contact with the second changeover contact 220c, a current flows through the drive coil 230a of the power supply line opening/closing relay 230 to be in an energized state. As a result, the common contact 230b and the make contact 230c of the power supply line opening/closing relay 230 are connected, whereby the power supply line 202a extending from the battery 205 through the fog lamp switch 270 is disconnected by the power supply line opening/closing relay 230, and the fog lamp 201 is turned off without being supplied to any of the white LED group 211 and the yellow LED group 212 constituting the LED module 210.

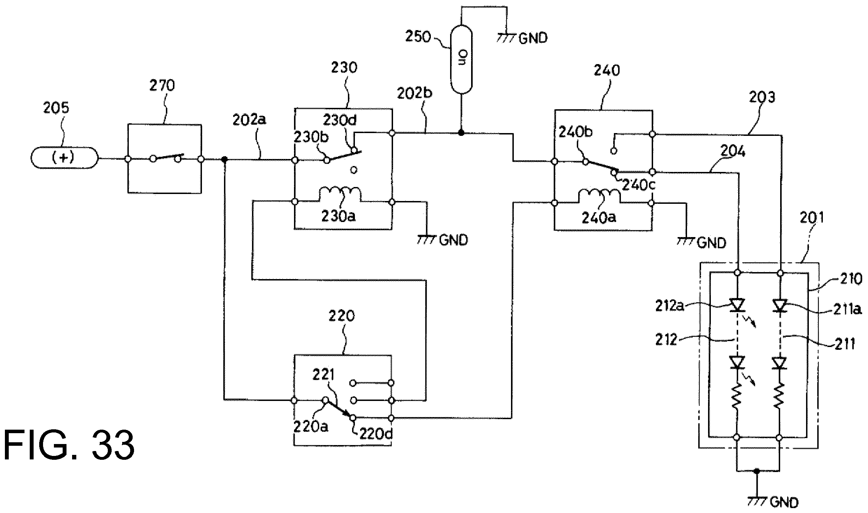

Further, as shown in the circuit diagram of FIG. 33, when the movable element 221 connected to the common terminal 220a of the lighting color changeover switch 220 is brought into contact with the third changeover contact 220d, a current does not flow through the drive coil 230a of the power supply line opening/closing relay 230, and a non-energized state is achieved. As a result, the common contact 230b and the break contact 230d of the power supply line opening/closing relay 230 are connected to each other, and a current flows through the drive coil 240a of the power supply changeover relay 240 to be in an energized state, so that the common contact 240b and the make contact 240c are connected to each other.

As a result, the electric power supplied from the battery 205 is supplied to the yellow LED group 212 constituting the LED module 210 via the power supply line 202a and 202b and the power supply line 204 connected to the make contact 240c of the power supply changeover relays 240, so that the yellow LEDs 212a are turned on to emit yellow light from the fog lamp 201.

The fog lamp lighting display indicator 250 provided in the middle of the power supply line 202b is activated for displaying ("On" state) when the white LED group 211 supplied with electric power through the power supply line 202b is turned on (see FIG. 31) and when the yellow LED group 212 supplied with electric power through the power supply line 202b is turned on (see FIG. 33). On the other hand, when the power supply line 203 is cut off and the white LED group 211 and the yellow LED group 212 are simultaneously turned off (see FIG. 32), the fog lamp lighting display indicator 250 is not activated for displaying ("Off' state). In other words, the fog lamp lighting display indicator 250 is activated for displaying corresponding to the lighting of the fog lamp 201 regardless of the light color of the light emitted from the fog lamp 201.

Incidentally, in the lighting color changeover switch 220 of the single-pole triple-throw type, white light is emitted from the fog lamp 201 by the contact between the common contact 220a and the first changeover contact 220b as described above, i.e., the first changeover contact 220b is turned on. When the common contact 220a and the second switching contact 220c come into contact with each other, i.e., the second switching contact 220c is turned on, the fog lamp 201 is turned off. When the common contact 220a and the third switching contact 220d come into contact with each other, i.e., the third switching contact 220d is turned on, yellow light is emitted from the fog lamp 201.

Therefore, in both the case of switching the light emitted from the fog lamp 201 from white light to yellow light and the case of switching the light emitted from the fog lamp 201 from yellow light to white light, the non-lighting state is always sandwiched between the switching of the light colors of the outgoing light by the operation mode of the lighting color changeover switch 220.

As a result, with respect to the switching of the light color of the outgoing light of the fog lamp restricted by the UN standard, the provision of the non-lighting state between the switching of the light colors can satisfy the standard in which the light color is prevented from changing continuously in time.

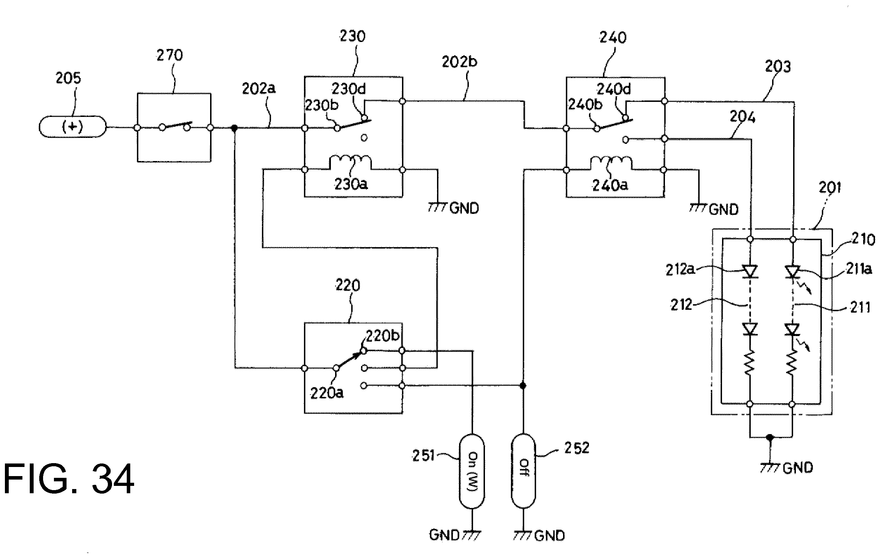

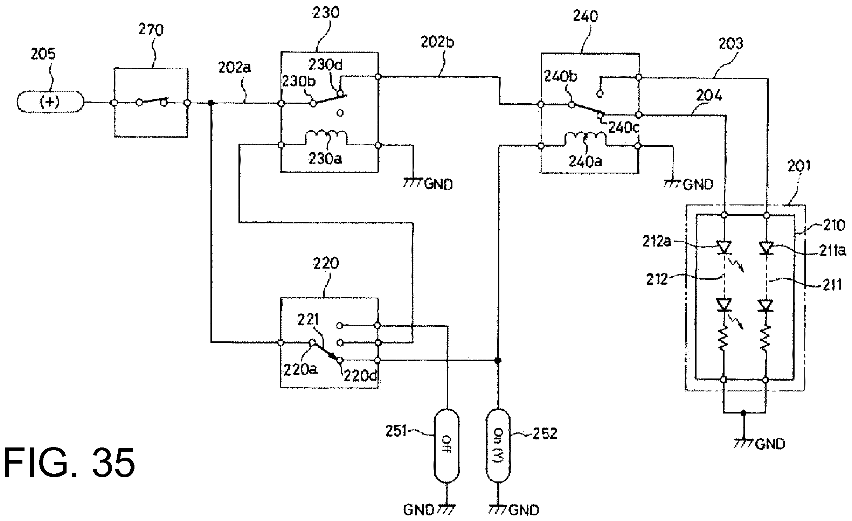

Instead of providing the fog lamp lighting display indicator 250 in the middle of the power supply line 202b connecting the break contact 230d of the power supply line opening/closing relay 230 and the common contact 240b of the power supply changeover relay 240, the following configuration is conceivable as another embodiment. That is, as shown in the circuit diagram of FIG. 34, an indicator (white light lighting display indicator) 251 is connected to the first switching contact 220b of the lighting color changeover switch 220. With this configuration, when white light is emitted from the fog lamp 201, the white light lighting display indicator 51 is activated, for example, to emit white light ("On (W)" state). Furthermore, as another embodiment, as shown in the circuit diagram of FIG. 35, an indicator (yellow light lighting display indicator) 252 is connected to the third switching contact 220d of the lighting color changeover switch 220. With this configuration, when yellow light is emitted from the fog lamp 201, the yellow light lighting display indicator 252 is activated, for example, to emit yellow light ("On (Y)" state).

As a result, the lighting operation and lighting color of the fog lamp 201 can be recognized by an operator (driver) with the indication of the white light lighting display indicator 251 or the yellow light lighting display indicator 252. In this case, it is also possible to use this configuration in combination with the fog lamp lighting indicator 250 provided on the power supply line 202b.

Incidentally, in the aforementioned circuit configuration, although not illustrated, it is possible to configure the LED module only by white LED groups of the same color emission in two circuits in place of the yellow LEDs constituting the yellow LED group. With this configuration, different light distribution characteristics (for example, wide-angle light distribution, narrow-angle light distribution, or the like) can be achieved by the respective white LED groups, for example, in combination with another optical system such as a reflector, a lens, and the like.

As a result of this configuration, the visibility of a driver can be enhanced by appropriately switching the light distribution characteristics of the white light emitted from the fog lamp in accordance with the road surface condition, the weather, and other external driving environments.

Similarly, it is possible to configure the LED module only by yellow LED groups of the same color emission in two circuits in place of the white LEDs constituting the white LED group. With this configuration, different light distribution characteristics (for example, wide-angle light distribution, narrow-angle light distribution, or the like) can be achieved by the respective yellow LED groups, for example, in combination with another optical system such as a reflector, a lens, or the like.

As a result of this configuration, the visibility of a driver can be enhanced by appropriately switching the light distribution characteristics of the yellow light emitted from the fog lamp in accordance with the road surface condition, the weather, and other external driving environments.

Note that the switching of the light distribution characteristic is always performed with the non-lighting state interposed between the switched states of the light colors described above.

Therefore, with respect to the switching of the light distribution characteristic of the outgoing light of the fog lamp in accordance with the UN standard, by providing a non-lighting state during the switching of the light distribution characteristic, the light distribution characteristic is prevented from changing continuously in time, so that the lamp satisfies the standard.

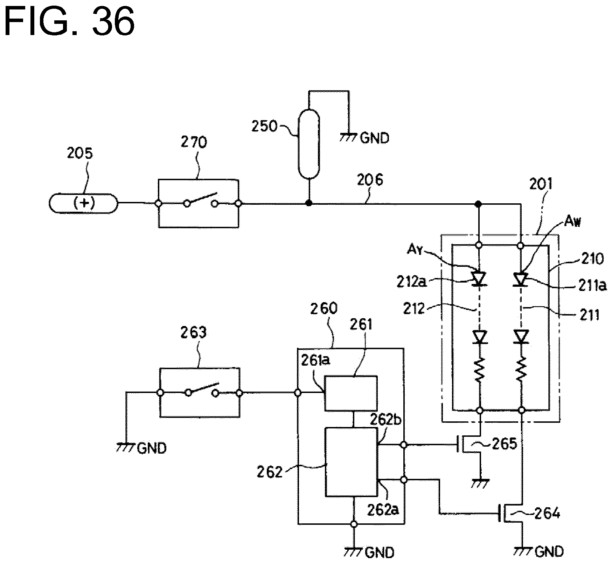

In another embodiment, instead of the fog lamp with the above circuit configuration, a fog lamp having a circuit configuration shown in FIG. 36 is also conceivable.

The fog lamp can include an LED module 210 composed of a white LED group 211 and a yellow LED group 212, an LED group lighting control circuit 260 having an input signal processing circuit portion 261 and a microcomputer portion 262 connected to the input signal processing circuit portion 261, a momentary switch (rebound switch) 263, and a TFT 264 and a TFT 265.

The TFT 264 is connected to the white LED group 211 as a switching element for the white LED group 211, and the TFT 265 is connected to the yellow LED group 212 as a switching element for the yellow LED group 212. The TFT 264 and the TFT 265 are controlled to be switched on/off by outputs from output terminals 262a and 262b of the microcomputer portion 262 constituting the LED group lighting control circuit 260, respectively.

The momentary switch 263 is connected to an input terminal 261a of the input signal processing circuit portion 261 constituting the LED group lighting control circuit 260, and the operation signal of the momentary switch 263 is processed by the input signal processing circuit portion 261 and sent to the microcomputer portion 262.

The anode A_{W} side of the white LED group 211 and the anode A_{Y} side of the yellow LED group 212 are connected to a fog lamp switch 270 provided on the battery 205 side via a power supply line 206. A fog lamp lighting display indicator 250 is connected to the middle of the power supply line 206.

The microcomputer portion 262 stores a program of a counter, and each time the momentary switch 263 is operated, an operation signal is processed by the input signal processing circuit portion 261, and taken in by the microcomputer portion 262, and the content of the counter is increased by one. With this operation, the position of the output terminal of the output signal (lighting signal) from the microcomputer portion 262 is moved accordingly.

More specifically, each time an operating signal is inputted, the output terminal position of the output signal repeats "none" → "262a" → "none" → "262b" → "none" → "262a" → "none" → "262b", and the TFT 264 or TFT 265 is switched by this output terminal position, so that the following operations are repeated: "non-lighting" → "white lighting" → "non-lighting" → "yellow lighting" → "non-lighting" → "white lighting" → "non-lighting" → "yellow lighting".

In this lighting mode, similarly to the case of using the lighting color changeover switch 220 described above, in either the case of switching the light emitted from the fog lamp 201 from white light to yellow light or the case of switching the light emitted from the fog lamp 201 from yellow light to white light, the non-lighting state is always sandwiched between the switching of the light colors of the emitted light by the program of the microcomputer portion 262.

Therefore, with respect to the switching of the light color of the outgoing light of the fog lamp in accordance with the UN standard, by providing a non-lighting state during the switching of the light colors, the light color is prevented from changing continuously in time, so that the lamp satisfies the standard.

In this circuit configuration, the switching of the lighting color can be performed by repeatedly operating one momentary switch, and electric power can be supplied to the LED module by one power supply line without the need to provide peripheral components such as additional relays.

Therefore, a lighting control circuit having a simple configuration with a small number of parts and wiring can be realized.

Further in this configuration, different light distribution characteristics (for example, wide-angle light distribution, narrow-angle light distribution, or the like) can be achieved by providing the respective white LED group 211 and yellow LED group 212, for example, with another optical system such as a reflector, a lens, or the like.

## Claims

1. A vehicular lamp comprising: an optical system (1, 7) including an LED (3a, 3b, 4a, 4b) serving as a light source and an inner lens (2, 10, 20) for performing light distribution control of light emitted from the LED (3a, 3b, 4a, 4b), the vehicular lamp being **characterized in that**
the LED (3a, 3b, 4a, 4b) is composed of a plurality of types of LEDs (3a, 3b, 4a, 4b) having different emission colors,
the inner lens (2, 10, 20) is composed of an even number of lenses (10, 20) which have the same shape and size and are formed of the same material, and which are integrally formed side by side in a lateral direction,
in a front view of the optical system (1, 7), the LEDs (3a, 3b, 4a, 4b) of different emission colors from each other are positioned at respective line symmetric positions with a symmetric axis (Y₁₀, Y₂₀) being a bisector of each of the even-numbered lenses (10, 20) constituting the inner lens (2) in the lateral direction, and
the LEDs (3a, 3b, and 4a, 4b) of the same emission color are positioned at respective symmetric positions with a symmetry axis (Y) being a bisector of the inner lens (2) in the lateral direction.

2. A vehicular lamp comprising an optical system (5) including an LED (3a, 3b, 3c, 4a, 4b, 4c) serving as a light source and an inner lens (6, 10, 20, 30) for performing light distribution control of light emitted from the LED (3a, 3b, 3c, 4a, 4b, 4c), the vehicular lamp **characterized in that**
the LED (3a, 3b, 3c, 4a, 4b, 4c) is composed of a plurality of types of LEDs (3a, 3b, 3c, 4a, 4b, 4c) having different emission colors,
the inner lens (6, 10, 20, 30) is composed of three or more odd-numbered lenses (10, 20, 30) which have the same shape and size and are formed of the same material, and which are integrally formed side by side in a lateral direction,
in a front view of the optical system (5), one (3c) of the plurality of LEDs (3a, 3b, 3c, 4a, 4b, 4c) is positioned on a bisector of the lens (30) located at the center of the odd-numbered lenses (10, 20, 30) constituting the inner lens (6) in the lateral direction,
the LEDs (3a, 3b, 4a, 4b) of different emission colors are positioned at respective symmetric positions on a symmetric axis (Y₁₀, Y₂₀) being a bisector of each of the other lenses (10, 20) than the lens (30) at the center in the lateral direction, and
the LEDs (3a, 3b, and 4a, 4b) of the same emission color are positioned at respective symmetric positions with a symmetry axis (Y) being a bisector of the inner lens (2) in the lateral direction.

3. The vehicular lamp according to claim 1 or 2, **characterized in that**
each of the LEDs (3a, 3b, 3c, 4a, 4b, 4c) has a light emitting surface (3aa, 3ba, 3ca, 4aa, 4ba, 4ca) with a lower end (3ab, 3bb, 3cb, 4ab, 4bb, 4cb) thereof, and is arranged so that the lower end (3ab, 3bb, 3cb, 4ab, 4bb, 4cb) is positioned on a bisector (X) of the inner lens (2, 6) in a vertical direction.

4. The vehicular lamp according to any one of claims 1 to 3, **characterized by** comprising a light shielding member (40) that is disposed in a vicinity of or in contact with the plurality of types of LEDs (3a, 3b, 3c, 4a, 4b, 4c), and wherein
the light shielding member (40) extends from a lower side to an upward side to have an upper end (40a) which is parallel to the bisector (X) of the inner lens (2, 6) in the vertical direction, and
the upper end is positioned at a position covering the lower end (3ab, 3bb, 3cb, 4ab, 4bb, 4cb) of the light emitting surface (3aa, 3ba, 3ca, 4aa, 4ba, 4ca) or a part of a lower portion of the light emitting surface (3aa, 3ba, 3ca, 4aa, 4ba, 4ca) of each of the plurality of types of LEDs (3a, 3b, 3c, 4a, 4b, 4c).

5. The vehicular lamp according to any one of claims 1 to 4, **characterized in that**
the plurality of types of the LEDs (3a, 3b, 3c, 4a, 4b, 4c) include a white LED (3a, 3b, 3c) configured to emit white light and a yellow LED (4a, 4b, 4c) configured to emit yellow light.

6. The vehicular lamp according to any one of claims 1 to 5, **characterized in that**
the vehicular lamp is any of an accessory lamp and a fog lamp for an automobile.

7. The vehicular lamp according to any one of claims 1 to 6, **characterized by** further comprising a lighting control circuit, the vehicular lamp including the light source having LED groups (211, 212) that are each formed by a series connection circuit of the plurality of LEDs (211a, 212a) and arranged in parallel in two circuits,
the lighting control circuit comprising:
a first relay (230) for energizing/de-energizing electric power from a battery (205),
a second relay (240) for switching the electric power supplied to the first relay (230) to any of the LED groups (211, 212) to supply it with, and
a three-contact type changeover switch (220) for switching between a first state where a coil portion (230a) of the first relay (230) and a coil portion (240a) of the second relay (240) are not energized, a second state where the coil portion (230a) of the first relay (230) is energized, and a third state where the coil portion (240a) of the second relay (240) is energized, in this order, wherein
when the three-contact type changeover switch (220) selects the first state, electric power is supplied to one LED group of the LED groups (211, 212) of the two circuits to turn on the LED group,
when the three-contact type changeover switch (220) selects the state (2), no electric power is supplied to any of the LED groups (211, 212) of the two circuits, and
when the three-contact type changeover switch (220) selects the third state, electric power is supplied to the other LED group of the LED groups (211, 212) of the two circuits to turn on the LED group.

8. The vehicular lamp according to claim 7, **characterized in that**
the first relay (230) has a break contact (230d), and the second relay (240) has a common contact (240b) to which the break contact (230d) of the first relay (230) is connected.

9. The vehicular lamp according to claim 7 or 8, **characterized by** comprising an indicator (250, 251) for displaying a state of lighting of a vehicular lamp, the indicator (250, 251) being connected to a middle of a connection between the break contact (230d) of the first relay (230) and the common contact (240b) of the second relay (240).

10. The vehicular lamp according to any one of claims 7 to 9, **characterized in that**
the LED groups (211, 212) of the two circuits include a white LED group (211) composed of a plurality of white LEDs (211a) configured to emit white light and a yellow LED group (212) composed of a plurality of yellow LEDs (212a) configured to emit yellow light.

11. The vehicular lamp according to any one of claims 7 to 9, **characterized in that**
each of the LED groups (211, 212) of the two circuits has an optical system having light distribution characteristics different from each other.

12. The vehicular lamp according to any one of claims 1 to 6, **characterized by** further comprising a lighting control circuit, the vehicular lamp including the light source having LED groups (211, 212) that are each formed by a series connection circuit of the plurality of LEDs (211a, 212a) and arranged in parallel in two circuits,
the lighting control circuit comprising:
a switching element (264, 265) that is connected to each of the LED groups (211, 212) of the two circuits and is configured to control energization/disconnection,
a switching element control circuit (260) having an input signal processing circuit unit (261) configured to signal-process an input signal, and a microcomputer unit (262) configured to control the switching element (264, 265) by counting the input signal processed and switch an output terminal position of an output signal, and
a momentary switch (263) connected to the input signal processing circuit unit (261), wherein
each time the momentary switch (263) is operated, the switching element (264, 265) connected to the output terminal of the microcomputer unit (262) is controlled to repeat lighting and non-lighting in the order of a lighting state of one LED group of the LED groups (211, 212) of the two circuits, a non-lighting state of both the LED groups (211, 212) of the two circuits, and a lighting state of the other LED group of the LED groups (211, 212) of the two circuits.

13. The vehicular lamp according to claim 12, **characterized by** comprising an indicator (250) for displaying a state of lighting of a vehicular lamp, the indicator (250) being connected to a power supply line (206) connected to each of the LED groups (211, 212) of the two circuits.

14. The vehicular lamp according to claim 12 or 13, **characterized in that**
the LED groups (211, 212) of the two circuits include a white LED group (211) composed of a plurality of white LEDs (211a) configured to emit white light and a yellow LED group (212) composed of a plurality of yellow LEDs (212a) configured to emit yellow light.

15. The vehicular lamp according to claim 12 or 13, **characterized in that**
each of the LED groups (211, 212) of the two circuits has an optical system having light distribution characteristics different from each other.

## Patentansprüche

1. Eine Fahrzeugleuchte, die Folgendes aufweist: ein optisches System (1, 7) mit einer LED (3a, 3b, 4a, 4b), die als Lichtquelle dient, und eine innere Linse (2, 10, 20) zur Durchführung einer Steuerung von Lichtverteilung des Lichts, das von der LED (3a, 3b, 4a, 4b) emittiert wird, wobei die Fahrzeugleuchte **dadurch gekennzeichnet ist, dass**
die LED (3a, 3b, 4a, 4b) aus einer Vielzahl von Typen von LEDs (3a, 3b, 4a, 4b) mit unterschiedlichen Emissionsfarben besteht,
die innere Linse (2, 10, 20) aus einer geraden Anzahl von Linsen (10, 20) zusammengesetzt ist, die die gleiche Form und Größe haben und aus dem gleichen Material gebildet sind, und die in einer seitlichen Richtung einstückig nebeneinander ausgebildet sind,
in einer Vorderansicht des optischen Systems (1, 7) die LEDs (3a, 3b, 4a, 4b) mit voneinander verschiedenen Emissionsfarben an jeweiligen zeilensymmetrischen Positionen angeordnet sind, wobei eine Symmetrieachse (Y₁₀, Y₂₀) eine Winkelhalbierende jeder der geradzahligen Linsen (10, 20) ist, die die innere Linse (2) in der seitlichen Richtung bilden, und
die LEDs (3a, 3b und 4a, 4b) mit der gleichen Emissionsfarbe an jeweiligen symmetrischen Positionen angeordnet sind, wobei eine Symmetrieachse (Y) eine Winkelhalbierende der inneren Linse (2) in der seitlichen Richtung ist.

2. Eine Fahrzeugleuchte, die ein optisches System (5) aufweist, mit einer LED (3a, 3b, 3c, 4a, 4b, 4c), die als Lichtquelle dient, und einer inneren Linse (6, 10, 20, 30) zur Durchführung einer Steuerung von Lichtverteilung des Lichts, das von der LED (3a, 3b, 3c, 4a, 4b, 4c) emittiert wird, wobei die Fahrzeugleuchte **dadurch gekennzeichnet ist, dass**
die LED (3a, 3b, 3c, 4a, 4b, 4c) aus einer Vielzahl von Typen von LEDs (3a, 3b, 3c, 4a, 4b, 4c) mit unterschiedlichen Emissionsfarben besteht,
die innere Linse (6, 10, 20, 30) aus drei oder mehr ungeradzahligen Linsen (10, 20, 30) zusammengesetzt ist, die die gleiche Form und Größe haben und aus dem gleichen Material gebildet sind, und die in einer seitlichen Richtung einstückig nebeneinander ausgebildet sind,
in einer Vorderansicht des optischen Systems (5) eine (3c) der Vielzahl von LEDs (3a, 3b, 3c, 4a, 4b, 4c) auf einer Winkelhalbierenden der Linse (30) positioniert ist, die in seitlicher Richtung in der Mitte der ungeradzahligen Linsen (10, 20, 30) angeordnet ist, die die innere Linse (6) bilden,
die LEDs (3a, 3b, 4a, 4b) mit unterschiedlichen Emissionsfarben an entsprechenden symmetrischen Positionen auf einer Symmetrieachse (Y₁₀, Y₂₀) angeordnet sind, die eine Winkelhalbierende jeder der anderen Linsen (10, 20) als der Linse (30) in der Mitte in der seitlichen Richtung ist, und
die LEDs (3a, 3b und 4a, 4b) der gleichen Emissionsfarbe an entsprechenden symmetrischen Positionen angeordnet sind, wobei eine Symmetrieachse (Y) eine Winkelhalbierende der inneren Linse (2) in seitlicher Richtung ist.

3. Die Fahrzeugleuchte nach Anspruch 1 oder 2, **dadurch gekennzeichnet, dass** jede der LEDs (3a, 3b, 3c, 4a, 4b, 4c) eine lichtemittierende Oberfläche (3aa, 3ba, 3ca, 4aa, 4ba, 4ca) mit einem unteren Ende (3ab, 3bb, 3cb, 4ab, 4bb, 4cb) davon hat und so angeordnet ist, dass das untere Ende (3ab, 3bb, 3cb, 4ab, 4bb, 4cb) auf einer Winkelhalbierenden (X) der inneren Linse (2, 6) in einer vertikalen Richtung positioniert ist.

4. Die Fahrzeugleuchte nach einem der Ansprüche 1 bis 3, **dadurch gekennzeichnet, dass** sie Folgendes aufweist:
ein Lichtabschirmelement (40), das in der Nähe oder in Kontakt mit der Vielzahl von Typen von LEDs (3a, 3b, 3c, 4a, 4b, 4c) angeordnet ist, und wobei
sich das Lichtabschirmelement 40) von einer unteren Seite zu einer oberen Seite erstreckt, so dass es ein oberes Ende (40a) hat, das parallel zu der Winkelhalbierenden (X) der inneren Linse (2, 6) in der vertikalen Richtung ist, und
das obere Ende in einer Position angeordnet ist, die das untere Ende (3ab, 3bb, 3cb, 4ab, 4bb, 4cb) der lichtemittierenden Oberfläche (3aa, 3ba, 3ca, 4aa, 4ba, 4ca) oder einen Teil eines unteren Abschnitts der lichtemittierenden Oberfläche (3aa, 3ba, 3ca, 4aa, 4ba, 4ca) von jedem der Vielzahl von Typen von LEDs (3a, 3b, 3c, 4a, 4b, 4c) abdeckt.

5. Die Fahrzeugleuchte nach einem der Ansprüche 1 bis 4, **dadurch gekennzeichnet, dass**
die Vielzahl der Typen der LEDs (3a, 3b, 3c, 4a, 4b, 4c) eine weiße LED (3a, 3b, 3c) beinhalten, die konfiguriert ist, weißes Licht zu emittieren, und eine gelbe LED (4a, 4b, 4c), die konfiguriert ist, gelbes Licht zu emittieren.

6. Fahrzeugleuchte nach einem der Ansprüche 1 bis 5, **dadurch gekennzeichnet, dass**
die Fahrzeugleuchte eine Zubehörleuchte oder ein Nebelscheinwerfer für ein Kraftfahrzeug ist.

7. Die Fahrzeugleuchte nach einem der Ansprüche 1 bis 6, **dadurch gekennzeichnet, dass** sie ferner eine Schaltung zur Beleuchtungssteuerung aufweist, wobei die Fahrzeugleuchte die Lichtquelle mit LED Gruppen (211, 212) beinhaltet, die jeweils durch eine Reihenschaltung der Vielzahl von LEDs (211a, 212a) gebildet werden und in zwei Schaltungen parallel angeordnet sind,
wobei die Schaltung zur Beleuchtungssteuerung Folgendes aufweist:
ein erstes Relais (230) zum Aktivieren/Deaktivieren der elektrischen Energie aus einer Batterie (205),
ein zweites Relais (240) zum Umschalten der elektrischen Energie, die dem ersten Relais (230) zugeführt wird, auf eine andere der LED-Gruppen (211, 212) um diese zu versorgen, und
einen Drei-Kontakt-Wechselschalter (220) zum Umschalten zwischen einem ersten Zustand, in dem ein Spulenabschnitt (230a) des ersten Relais (230) und ein Spulenabschnitt (240a) des zweiten Relais (240) nicht aktiviert sind, einem zweiten Zustand, in dem der Spulenabschnitt (230a) des ersten Relais (230) aktiviert ist,
und einem dritten Zustand, in dem der Spulenabschnitt (240a) des zweiten Relais (240) aktiviert ist, in dieser Reihenfolge, wobei
wenn der Drei-Kontakt-Wechselschalter (220) den ersten Zustand auswählt, elektrische Energie an eine LED-Gruppe der LED-Gruppen (211, 212) der beiden Schaltungen geliefert wird, um die LED-Gruppe einzuschalten,
wenn der Drei-Kontakt-Wechselschalter (220) den Zustand (2) auswählt, keine elektrische Energie an eine der LED-Gruppen (211, 212) der beiden Schaltungen geliefert wird, und
wenn der Drei-Kontakt-Wechselschalter (220) den dritten Zustand auswählt, elektrische Energie an die andere LED-Gruppe der LED-Gruppen (211, 212) der beiden Schaltungen geliefert wird, um die LED-Gruppe einzuschalten.

8. Die Fahrzeugleuchte nach Anspruch 7, **dadurch gekennzeichnet, dass**
das erste Relais (230) einen Unterbrecherkontakt (230d) aufweist, und das zweite Relais (240) einen gemeinsamen Kontakt (240b) aufweist, der mit dem der Unterbrecherkontakt (230d) des ersten Relais (230) verbunden ist.

9. Die Fahrzeugleuchte nach Anspruch 7 oder 8, **dadurch gekennzeichnet, dass** sie eine Anzeige (250, 251) zum Darstellen eines Zustandes der Beleuchtung einer Fahrzeugleuchte aufweist, wobei die Anzeige (250, 251) mit einer Mitte einer Verbindung zwischen dem Unterbrecherkontakt (230d) des ersten Relais (230) und dem gemeinsamen Kontakt (240b) des zweiten Relais (240) verbunden ist.

10. Die Fahrzeugleuchte nach einem der Ansprüche 7 bis 9, **dadurch gekennzeichnet, dass**
die LED-Gruppen (211, 212) der beiden Schaltungen eine weiße LED-Gruppe (211) beinhalten, die aus einer Vielzahl von weißen LEDs (211a) besteht, die konfiguriert sind, weißes Licht zu emittieren, und eine gelbe LED Gruppe (212) beinhalten, die aus einer Vielzahl von gelben LEDs (212a) besteht, die konfiguriert sind, gelbes Licht zu emittieren.

11. Die Fahrzeugleuchte nach einem der Ansprüche 7 bis 9, **dadurch gekennzeichnet, dass**
jede der LED-Gruppen (211, 212) der beiden Schaltungen ein optisches System mit voneinander verschiedenen Lichtverteilungscharakteristika aufweist.

12. Die Fahrzeugleuchte nach einem der Ansprüche 1 bis 6, **dadurch gekennzeichnet, dass** sie ferner eine Schaltung zur Beleuchtungssteuerung aufweist, wobei die Fahrzeugleuchte die Lichtquelle mit LED-Gruppen (211, 212) enthält, die jeweils durch eine Reihenschaltung der Vielzahl von LEDs (211a, 212a) gebildet und in zwei Schaltungen parallel angeordnet sind,
wobei die Schaltung zur Beleuchtungssteuerung Folgendes aufweist:
ein Schaltelement (264, 265), das mit jeder der LED-Gruppen (211, 212) der beiden Schaltungen verbunden ist und konfiguriert ist, Aktivieren/Trennen zu steuern,
eine Steuerschaltung (260) für das Schaltelement mit einer Eingangssignal-Verarbeitungsschaltungseinheit (261), die konfiguriert ist, ein Eingangssignal zu verarbeiten, und eine Mikrocomputereinheit (262), die konfiguriert ist, das Schaltelement (264, 265) durch Zählen des verarbeiteten Eingangssignals zu steuern und eine Position eines Ausgangsanschlusses für ein Ausgangssignal zu schalten, und
einen Momentanschalter (263), der mit der Eingangssignal-Verarbeitungsschaltungseinheit (261) verbunden ist, wobei
jedes Mal, wenn der Momentanschalter (263) betätigt wird, das Schaltelement (264, 265), das mit dem Ausgangsanschluss der Mikrocomputereinheit (262) verbunden ist, gesteuert wird, um das Aufleuchten und das Nichtaufleuchten zu wiederholen in der Reihenfolge eines Aufleuchtzustands einer LED-Gruppe der LED-Gruppen (211, 212) der beiden Schaltungen, eines Nichtaufleuchtzustands der beiden LED-Gruppen (211, 212) der beiden Schaltungen und eines Aufleuchtzustands der anderen LED-Gruppe der LED-Gruppen (211, 212) der beiden Schaltungen.

13. Fahrzeugleuchte nach Anspruch 12, **dadurch gekennzeichnet, dass** sie eine Anzeige (250) zum Darstellen eines Beleuchtungszustands einer Fahrzeugleuchte aufweist, wobei die Anzeige (250) mit einer Stromversorgungsleitung (206) verbunden ist, die mit jeder der LED-Gruppen (211, 212) der beiden Schaltungen verbunden ist.

14. Fahrzeugleuchte nach Anspruch 12 oder 13, **dadurch gekennzeichnet, dass**
die LED-Gruppen (211, 212) der beiden Schaltungen eine weiße LED-Gruppe (211) aufweisen, die aus einer Vielzahl von weißen LEDs (211a) besteht, die konfiguriert sind, weißes Licht zu emittieren, und eine gelbe LED-Gruppe (212), die aus einer Vielzahl von gelben LEDs (212a) besteht, die konfiguriert sind, gelbes Licht zu emittieren.

15. Die Fahrzeugleuchte nach Anspruch 12 oder 13, **dadurch gekennzeichnet, dass**
jede der LED-Gruppen (211, 212) der beiden Schaltungen ein optisches System mit voneinander verschiedenen Lichtverteilungscharakteristika aufweist.

## Revendications

1. Lampe de véhicule comprenant : un système optique (1, 7) comprenant une DEL (3a, 3b, 4a, 4b) servant de source lumineuse et une lentille interne (2, 10, 20) pour effectuer une commande de distribution de lumière de la lumière émise par la DEL (3a, 3b, 4a, 4b), la lampe pour véhicule étant **caractérisée en ce que**
la DEL (3a, 3b, 4a, 4b) est composée d'une pluralité de types de DELs (3a, 3b, 4a, 4b) ayant des couleurs d'émission différentes,
la lentille interne (2, 10, 20) est composée d'un nombre pair de lentilles (10, 20) qui ont la même forme et la même taille et sont formées du même matériau, et qui sont intégralement formées côte à côte dans une direction latérale,
dans une vue de face du système optique (1, 7), les DELs (3a, 3b, 4a, 4b) de couleurs d'émission différentes les unes des autres sont positionnées à des positions symétriques de ligne respectives avec un axe de symétrie (Y₁₀, Y₂₀) qui est une bissectrice de chacune des lentilles paires (10, 20) constituant la lentille interne (2) dans la direction latérale, et
les DELs (3a, 3b et 4a, 4b) de la même couleur d'émission sont positionnées à des positions symétriques respectives avec un axe de symétrie (Y) qui est une bissectrice de la lentille interne (2) dans la direction latérale.

2. Lampe de véhicule comprenant un système optique (5) comprenant une DEL (3a, 3b, 3c, 4a, 4b, 4c) servant de source lumineuse et une lentille interne (6, 10, 20, 30) pour effectuer une commande de distribution de lumière de la lumière émise par la DEL (3a, 3b, 3c, 4a, 4b, 4c), la lampe pour véhicule étant **caractérisée en ce que**
la DEL (3a, 3b, 3c, 4a, 4b, 4c) est composée d'une pluralité de types de DELs (3a, 3b, 3c, 4a, 4b, 4c) ayant des couleurs d'émission différentes,
la lentille interne (6, 10, 20, 30) est composée de trois lentilles impaires ou plus (10, 20, 30) qui ont la même forme et la même taille et sont formées du même matériau, et qui sont intégralement formées côte à côte dans une direction latérale,
dans une vue de face du système optique (5), une (3c) de la pluralité de DELs (3a, 3b, 3c, 4a, 4b, 4c) est positionnée sur une bissectrice de la lentille (30) située au centre des lentilles impaires (10, 20, 30) constituant la lentille interne (6) dans la direction latérale,
les DELs (3a, 3b, 4a, 4b) de différentes couleurs d'émission sont positionnées à des positions symétriques respectives sur un axe de symétrie (Y₁₀, Y₂₀) qui est une bissectrice de chacune des autres lentilles (10, 20) par rapport à la lentille (30) au centre dans la direction latérale, et
les DELs (3a, 3b et 4a, 4b) de la même couleur d'émission sont positionnées à des positions symétriques respectives avec un axe de symétrie (Y) qui est une bissectrice de la lentille interne (2) dans la direction latérale.

3. Lampe de véhicule selon la revendication 1 ou 2, **caractérisé en ce que**
chacune des DELs (3a, 3b, 3c, 4a, 4b, 4c) a une surface d'émission de lumière (3aa, 3ba, 3ca, 4aa, 4ba, 4ca) par son extrémité inférieure (3ab, 3b, 3cb, 4ab, 4bb, 4cb), et est agencée de sorte que l'extrémité inférieure (3ab, 3bb, 3cb, 4ab, 4bb, 4cb) est positionnée sur une bissectrice (X) de la lentille interne (2, 6) dans une direction verticale.

4. Lampe de véhicule selon l'une quelconque des revendications 1 à 3, **caractérisée en ce qu'**elle comprend un élément de protection contre la lumière (40) qui est disposé à proximité de ou en contact avec la pluralité de types de DELs (3a, 3b, 3c, 4a, 4b, 4c), et dans laquelle
l'élément de protection contre la lumière (40) s'étend d'un côté inférieur à un côté supérieur pour avoir une extrémité supérieure (40a) qui est parallèle à la bissectrice (X) de la lentille interne (2, 6) dans la direction verticale, et
l'extrémité supérieure est positionnée à une position couvrant l'extrémité inférieure (3ab, 3bb, 3cb, 4ab, 4bb, 4cb) de la surface émettrice de lumière (3aa, 3ba, 3ca, 4aa, 4ba, 4ca) ou d'une partie d'une portion inférieure de la surface émettrice de lumière (3aa, 3ba, 3ca, 4aa, 4ba, 4ca) de chacun de la pluralité de types de DELs (3a, 3b, 3c, 4a, 4b, 4c).

5. Lampe de véhicule selon l'une quelconque des revendications 1 à 4, **caractérisée en ce que**
la pluralité de types des DELs (3a, 3b, 3c, 4a, 4b, 4c) comprend une DEL blanche (3a, 3b, 3c) configurée pour émettre une lumière blanche et une DEL jaune (4a, 4b, 4c) configurée pour émettre une lumière jaune.

6. Lampe de véhicule selon l'une quelconque des revendications 1 à 5, **caractérisé en ce que** la lampe de véhicule est l'un quelconque d'un feu accessoire et d'un feu antibrouillard pour une automobile.

7. Lampe de véhicule selon l'une quelconque des revendications 1 à 6, **caractérisé en ce qu'**il comporte en outre un circuit de commande d'éclairage, le lampe de véhicule comprenant une source de lumière ayant des groupes de DELs (211, 212) qui sont chacun formés par un circuit de connexion en série d'une pluralité de DELs (211a, 212a) et agencés en deux circuits parallèles,
le circuit de commande d'éclairage comprenant :
un premier relais (230) pour fournir/arrêter de fournir de l'énergie électrique à partir d'une batterie (205),
un second relais (240) pour commuter l'énergie électrique fournie au premier relais (230) vers l'un quelconque des groupes de DELs (211, 212) pour l'alimenter, et
un commutateur de basculement du type à trois contacts (220) pour commuter, dans cet ordre, entre un premier état dans lequel une partie de bobine (230a) du premier relais (230) et une partie de bobine (240a) du deuxième relais (240) ne sont pas alimentées, un deuxième état dans lequel la partie de bobine (230a) du premier relais (230) est alimentée, et un troisième état dans lequel la partie de bobine (240a) du deuxième relais (240) est alimentée,
dans lequel
lorsque le commutateur de basculement de type à trois contacts (220) sélectionne le premier état, de l'énergie électrique est fournie à un groupe de DELs des groupes de DELs (211, 212) des deux circuits pour allumer le groupe de DELs,
lorsque le commutateur de basculement de type à trois contacts (220) sélectionne l'état (2), aucune énergie électrique n'est fournie à l'un quelconque des groupes de DELs (211, 212) des deux circuits, et
lorsque le commutateur de basculement de type à trois contacts (220) sélectionne le troisième état, de l'énergie électrique est fournie à l'autre groupe de DELs des groupes de DELs (211, 212) des deux circuits pour allumer le groupe de DELs.

8. Lampe de véhicule selon la revendication 7, **caractérisé en ce que**
le premier relais (230) a un contact d'ouverture (230d), et le second relais (240) a un contact commun (240b) auquel le contact d'ouverture (230d) du premier relais (230) est connecté.

9. Lampe de véhicule selon la revendication 7 ou 8, **caractérisé en ce qu'**elle comprend un indicateur (250, 251) pour afficher un état d'éclairage d'une lampe de véhicule, l'indicateur (250, 251) étant connecté à un point milieu d'une connexion entre le contact d'ouverture (230d) du premier relais (230) et le contact commun (240b) du second relais (240).

10. Lampe de véhicule selon l'une quelconque des revendications 7 à 9, **caractérisé en ce que**
les groupes de DELs (211, 212) des deux circuits comprennent un groupe de DELs blanches (211) composé d'une pluralité de DELs blanches (211a) configurées pour émettre une lumière blanche et un groupe de DELs jaune (212) composé d'une pluralité de DELs jaunes (212a) configurées pour émettre une lumière jaune.

11. Lampe de véhicule selon l'une quelconque des revendications 7 à 9, **caractérisé en ce que**
chacun des groupes de DELs (211, 212) des deux circuits a un système optique ayant des caractéristiques de distribution de lumière différentes les unes des autres.

12. Lampe de véhicule selon l'une quelconque des revendications 1 à 6, **caractérisée en ce qu'**elle comprend en outre un circuit de commande d'éclairage, la lampe de véhicule incluant la source de lumière ayant des groupes de DELs (211, 212) qui sont chacun formés par un circuit de connexion en série d'une pluralité de DELs (211a, 212a) et agencés en deux circuits parallèles,
le circuit de commande d'éclairage comprenant :
un élément de commutation (264, 265) qui est connecté à chacun des groupes de DELs (211, 212) des deux circuits et est configuré pour commander la fourniture d'énergie/déconnexion,
un circuit de commande d'élément de commutation (260) ayant une unité de circuit de traitement de signal d'entrée (261) configurée pour traiter un signal d'entrée, et une unité de microordinateur (262) configurée pour commander l'élément de commutation (264, 265) en comptant le signal d'entrée traité et en commutant une position de borne de sortie d'un signal de sortie, et
un commutateur temporaire (263) connecté à l'unité de circuit de traitement de signal d'entrée (261),
dans lequel :
à chaque fois que le commutateur temporaire (263) est actionné, l'élément de commutation (264, 265) connecté à la borne de sortie de l'unité de microordinateur (262) est commandé pour répéter l'éclairage et le non éclairage dans l'ordre d'un état d'éclairage d'un groupe de DELs des groupes de DELs (211, 212) des deux circuits, d'un état de non éclairage des deux groupes de DELs (211, 212) des deux circuits, et d'un état d'éclairage de l'autre groupe de DELs des groupes de DELs (211, 212) des deux circuits.

13. Lampe de véhicule selon la revendication 12, **caractérisé en ce qu'**elle comprend un indicateur (250) pour afficher un état d'éclairage d'une lampe de véhicule, l'indicateur (250) étant connecté à une ligne d'alimentation (206) connectée à chacun des groupes de DELs (211, 212) des deux circuits.

14. Lampe pour véhicule selon la revendication 12 ou 13, **caractérisé en ce que** les groupes de DELs (211, 212) des deux circuits comprennent un groupe de DELs blanche (211) composé d'une pluralité de DELs blanches (211a) configurées pour émettre une lumière blanche et un groupe de DELs jaunes (212) composé d'une pluralité de DELs jaunes (212a) configurées pour émettre une lumière jaune.

15. Lampe de véhicule selon la revendication 12 ou 13, **caractérisé en ce que**
chacun des groupes de DELs (211, 212) des deux circuits a un système optique ayant des caractéristiques de distribution de lumière différentes les unes des autres.
